# EUROPEAN PATENT APPLICATION

(11) **EP 1 486 819 A1**
(43) Date of publication of application: **15.12.2004**
(21) Application number: 03705244.6
(22) Date of filing: 17.02.2003
(51) Int. Cl.: G02F 1/1337

(54) **ALIGNMENT LAYER, PROCESS FOR PRODUCING ALIGNMENT LAYER, SUBSTRATE WITH ALIGNMENT LAYER AND LIQUID CRYSTAL DISPLAY**

(30) Priority: 15.02.2002 JP 2002039376
(71) Applicant: DAI NIPPON PRINTING CO., LTD., Tokyo 162-8001 (JP)
(72) Inventor: TANAKA, Tomio c/o DAI NIPPON PRINTING CO., LTD., Tokyo 162-8001 (JP); KOBAYASHI, Hironori DAI NIPPON PRINTING CO., LTD., Tokyo 162-8001 (JP)
(74) Representative: Smart, Peter John
(86) International application number: PCT/JP2003/001664
(87) International publication number: WO 2003/069400

(57) **Abstract**

The present invention has a main object to provide an orientation film that enables appropriately orienting the liquid crystal without forming a structural member such as a projecting portion, etc. or without performing rubbing processing.

To attain the object, the present invention provides an orientation film that has on its surface on a side where the liquid crystal layer is contacted therewith a pattern including a water-repellent region and a hydrophilic region that is a region where the angle of contact with water is smaller than that in the water-repellent region.

## Description

### [TECHNICAL FIELD]

The present invention relates to an orientation film that can orient a liquid crystal molecule to a direction which is suitable with respect to a relevant substrate and that'is advantageous in terms of the cost and, more particularly, to an orientation film that enables, for improving the field-of-view characteristic, easy division of the orientation direction within a relevant pixel, a substrate equipped with the orientation film, and a liquid crystal display device that uses the orientation film-equipped substrate.

### [BACKGROUND ART]

A liquid crystal cell is a display device that utilizes the electro-optical change of the liquid crystal. It is low in size and light in weight, as the device, and is small in power consumption, and the like. Attention has in recent years been drawn toward those characteristics of the liquid crystal cell, and it has been the subject of a remarkable expansion and development as a display device for use in various kinds of displays. For example, a twisted nematic type (TN type) field effect type liquid crystal cell that uses nematic liquid crystal having a positive dielectric-anisotropic property as well as a pair of electrode substrates that oppose each other is typical of the liquid crystal cell. In the cell, so-called "homogeneous orientation" of the liquid crystal molecule is achieved by the molecule being oriented in parallel with the substrate at each interface. Further, both substrates are combined with each other so that the directions in which the liquid crystal molecules are oriented may intersect each other at a right angle.

On the other hand, in a nematic liquid crystal having negative dielectric anisotropic property, many field effect type liquid crystal cells are known. They include (1) a field-controlled birefringence type (ECB type) wherein so-called "homeo-tropic" orientation of the liquid crystal molecule is achieved; at each interface of a pair of electrode substrates that oppose each other the liquid crystal molecule is oriented perpendicularly to the substrate and a change in the birefringence in the liquid crystal layer that occurs when a voltage has been applied is used, (2) a phase-transition type (PC type) which utilizes a change in the phase structure of the liquid crystal, and (3) a guest/host type (GH type) in which coloring matter is mixed.

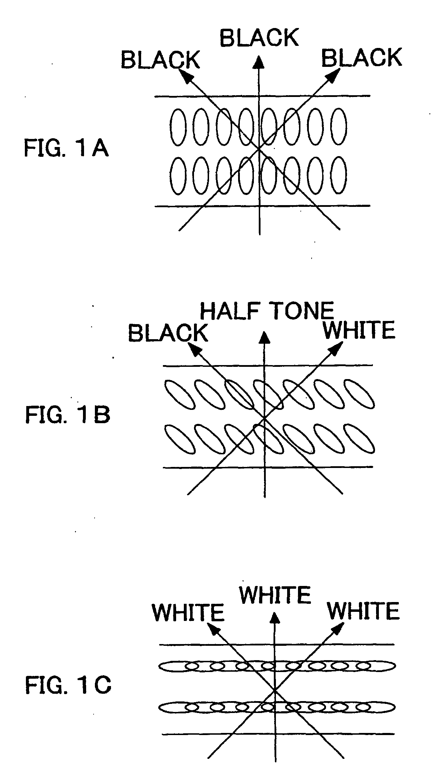

A brief explanation will now be given, using FIG. 1, of the above-described liquid crystal display device in vertical orientation mode. This vertical orientation mode is the one in which negative type liquid-crystalline material having negative dielectric constant anisotropy and an orientation film in the vertical direction are combined with each other. In that mode, as illustrated in FIG. 1A, when no voltage is applied, the liquid crystal molecule is oriented in the vertical direction, so that a black display is given. As illustrated in FIG. 1C, when a prescribed voltage level is applied, the liquid crystal molecule is oriented in the horizontal direction, so that a white display is given. This vertical orientation mode has the advantage that, compared with the TN mode, contrast of the display is high and, in addition, black/white level response speed also is high.

However, in the case where a half tone display is made in the vertical orientation mode, a problem arises in that the displayed state depends on the viewing angle. When a half tone is displayed in the vertical orientation mode, a lower voltage level is applied than when a white color is displayed. In this case, as illustrated in FIG. 1B, the liquid crystal molecule becomes oriented in an oblique direction. In that case, as illustrated, with respect to a light that advances from the right/lower to the left/upper, the liquid crystal molecule is oriented parallel to the light. Accordingly, because of the liquid crystal's exhibiting almost no birefringence effect, when viewing from the left side, the liquid crystal looks black. In contrast to this, with respect to a light that advances from the left/lower to the right/upper, the liquid crystal molecule is oriented perpendicularly to the light. Therefore, the liquid crystal exhibits a great birefringence effect upon the incident light, so that the display is near to white. Therefore, the vertical orientation mode had the problem that the displayed state depended on the viewing angle.

To solve the above-described problem, it is known that the viewing angle characteristic is improved by dividing the orientation direction of the liquid crystal molecule into a plurality of different directions within the pixel. Japanese Patent Application Laid-Open No. 6-301036 discloses a liquid crystal display device in vertical orientation mode, in which an opening portion is formed in each of the mutually opposing portions at the centers of the pixel electrodes of the opposing electrodes; the portions where the electric field is inclined are formed at the central parts of the pixels; and the direction in which the liquid crystal molecule is oriented is thereby divided into two, or, four, directions. However, the liquid crystal display device that is disclosed in Japanese Patent Application Laid-Open No. 6-301036 involves the problem that the response speed is slow. Further, it has turned out to be the case that, especially, the response speed is low at the time when a transition is made from a state where no voltage is applied to a state where a voltage is applied. It is thought that this is because the length of a region being formed within the pixel where the directions in which the liquid crystal molecules are oriented are the same is approximately half the length of the pixel, and, because, therefore, a significantly large length of time is needed until the orientation of all the liquid crystal molecules within the region is put in regular order.

On the other hand, Japanese Patent Application Laid-Open No. 7-199193 discloses the following liquid crystal display device in vertical orientation mode. In that device, by providing on the electrode inclined surfaces the directions of which are different, the direction in which the liquid crystal molecule is oriented within the pixel is differentiated or divided into a plurality of directions. However, in the disclosed construction, since the inclined surfaces are provided on the entire pixel, when no voltage is applied, the liquid crystal contacting every orientation surface is oriented along the inclined surface. Therefore, it is impossible to obtain a complete display of black, with the result that there is a problem that the contrast becomes lowered. In addition, since the inclined surfaces are provided over the entire pixel, it turned out to be the case that the inclined surface is gentle and this cannot be enough to define the orientation direction of the liquid crystal. To make the inclined surface sharper, it is necessary to make the relevant structure greater thicker. However, making the relevant structure of the dielectric thicker has the result that during the operation of the device electric charge is accumulated on the structure. It has turned out to be the case that this results in the phenomenon called "seizure" occurring, where due to the electric charge that has been accumulated thereon the direction of the liquid crystal molecule is not changed even when a voltage is applied between the electrodes.

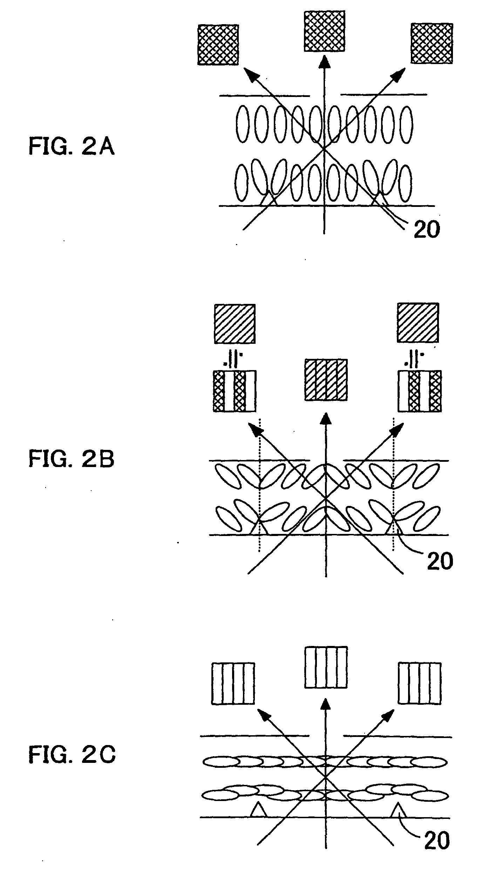

Further, as means for solving the above-described problem, there is disclosed in Japanese Patent-Inserted Official Gazette No. 2947350 a technique for forming a projecting portion on the substrate as domain regulating means. FIGS. 2A to 2C are views illustrating the principle that is relevant thereto. As illustrated in FIG. 2A, in a state where no voltage is applied, the liquid crystal molecule is oriented in a direction vertical to the surface of the substrate. Applying an intermediate voltage has the resultthat, as illustrated in FIG. 2B, at the electrode slit portion (electrode edge portion), an electric field that is inclined with respect to the surface of the substrate occurs. Also, the liquid crystal molecule at the projecting portion 20 is slightly inclined from that in a state where no voltage is applied. Due to the inclined surface of the projecting portion as well as the electric field that occurs slantwise, the direction in which the liquid crystal molecule is inclined is determined. Thereby, at the position just central between the projecting portion 20 and the electrode slit, the direction in which the liquid crystal molecule is oriented is divided into a plurality of directions. At this time, a light that transmits, for example, from just below to just above is somewhat affected by birefringence and that transmission is suppressed because the liquid crystal molecule is somewhat inclined. As a result of this, a half tone of gray display is obtained. In a region where the liquid crystal molecule is inclined leftward, a light that transmits from right lower to left upper has the difficulty of transmitting, and, in a region where the liquid crystal molecule is inclined rightward, is very easy to transmit. Therefore, when averaged, a half tone of gray display is obtained. According to the same principle, a light that transmits from left lower to right upper, also, enables a display of gray. Namely, a uniform level of display is obtained in all directions. Further, when a prescribed voltage is applied, the liquid crystal molecule becomes horizontal, whereby a display of white is obtained. 'Accordingly, in all states of display that include a state of black being displayed, a state of half tone being displayed, and a state of white being displayed, an excellent display that has less dependency on the viewing angle is obtained.

However, the above-described method necessitates forming the structural member of "projecting portion" on the liquid crystal substrate and, therefore, has various problems such as making the manufacturing process complex, increasing the cost, and decreasing the yield.

### [DISCLOSURE OF INVENTION]

The present invention has been made in view of the above-described problems and its main object is to provide an orientation film that enables the liquid-crystalline molecule to be appropriately oriented without forming a structural member ("projecting portion") such as that described above and, in addition, without performing rubbing.

To attain the above object, the present invention provides an orientation film which comprises a pattern, on its surface of a side where a liquid crystal layer is contacted, that includes a water-repellent region and a hydrophilic region that is a region where the angle of contact with water is smaller than that in the water-repellent region. By forming the hydrophilic region, within the water-repellent region, into a pattern configuration in the above-described way, for example in a liquid crystal display device in vertical orientation mode, it becomes possible, by utilizing the nature that the liquid crystal molecule that is vertically oriented in the water-repellent region is inclined within the hydrophilic region, to perform orientation division, within a relevant pixel, of the liquid crystal molecule that has been vertically oriented. Accordingly, by using that orientation film, it is possible to easily perform the orientation division within the pixel and to make the liquid crystal display device less dependent on the viewing angle through the same action as that which occurs when having formed the projecting portion that was stated before.

In the present invention, preferably, the angle of contact with water in the water-repellent region is greater by an angle falling within a range of from 10° to 120° than that in the hydrophilic region. This is because, by using a difference in wettability between the water-repellent region and the hydrophilic region in this range, it is possible to more effectively perform orientation within the pixel of the liquid crystal molecule.

Also, in the present invention, it is preferable that the angle of contact with water in the water-repellent region falls within a range of from 40° to 120°. This is because, when using the orientation film in, for example, the liquid crystal display device in vertical orientation mode, in order to vertically orient the liquid crystal molecule within the water-repellent region, it is preferable that the orientation film has a water repellency that is within the range described above.

Also, in the present invention, the orientation film comprises a compound that has polyimide, polyamide, or organopolysiloxane as the principal chain and has as the side chain linear alkyl group, or fluorine-containing alkyl group, the number of carbons of which is from 4 to 22 inclusive; and the density of the side chains in the water-repellent region is lower than that of the side chains in the hydrophilic region.

As described above, the present invention is based on the property that the liquid crystal molecule in the water-repellent region is vertically oriented and that in the hydrophilic region is inclined. However, if, for example, using the orientation film in the liquid crystal display device in vertical orientation mode, it is preferable to further use the orientation film having formed on its surface side chains for vertically orienting the liquid crystal molecule to enhance the orientation property of the liquid crystal molecule. From this point of view, an orientation film that comprises the compound described above is preferable. Further, from the point of view that in the hydrophilic region the liquid crystal molecule preferably is inclined, it is preferable that the density of the side chains be lower in the hydrophilic region than in the water-repellent region.

In the water-repellent region, preferably, the weight of the side chains is 5% by weight or more based upon the total weight of the relevant material (orientation film material). This is because, if having such a level of side chains, the orientation film has an orientation property that is sufficient as the orientation film.

In the present invention, preferably, the organopolysiloxane is polysiloxane that contains therein a fluoroalkyl group and is the one that is a hydrolytic condensate or co-hydrolytic condensate of one, or two or more, kinds of silicon compounds each of which is expressed by YₙSiX₍₄₋ₙ₎ (where Y represents an alkyl group, fluoroalkyl group, vinyl group, amino group, phenyl group, or epoxy group; X represents an alkoxyl group or halogen; and n represents an integer of from 0 to 3 inclusive.). The reason for this is as follows. By using such a organopolysiloxane when performing treatment with the use of a photocatalyst-containing layer substrate that will later be described, it is possible to relatively easily create the hydrophilic region in the water-repellent region and to make greater the difference in wettability between the water-repellent region and the hydrophilic region. Therefore, this material is suitable for causing orientation within the pixel of the liquid crystal molecule.

Also, in the present invention, preferably, the polyimide is the one that is prepared by causing reaction and polymerization of at least a tetracarboxylic acid component and a diamine component containing a linear alkyl group and thereby making this material a polyimide precursor containing therein a linear alkyl group and imidizing the precursor. The reason for this is as follows. The polyimide has hitherto been used as the orientation film and, when forming the orientation film using the material, there is a very low possibility that inconvenience will arise.

Also, the present invention provides a method of manufacturing an orientation film, which comprises an orientation film-forming process for forming an orientation film on a substrate, and a pattern-forming process for forming with respect to the surface of the orientation film a pattern including a water-repellent region and a hydrophilic region that is a region where the angle of contact with water is smaller than that in the water-repellent region.

In the present invention, since it is possible to orient within the pixel by simply forming the wettability pattern including the water-repellent region and the hydrophilic region on the orientation film in the above-described way, there is the advantage of enabling easier manufacturing than by using a method of, for example, forming a structural member such as a projecting portion.

Also, in the present invention, preferably, the orientation film formed on the substrate is a change-in-wettability layer the wettability on whose surface changes due to the action of photocatalyst; and the pattern-forming process comprises:
a photocatalyst-containing layer side substrate-preparing process for preparing a photocatalyst-containing layer side substrate that has a photocatalyst-containing layer containing therein photocatalyst and a base material member; and
a photocatalyst-treating process for, after disposing the photocatalyst-containing layer and the change-in-wettability layer in the way that the gap therebetween becomes 200µm or less, radiating light energy from a prescribed direction onto the resulting mass to thereby form a pattern, including a hydrophilic region and a water-repellent region, with respect to the surface of the change-in-wettability layer.

The reason for this is as follows. Namely, simply by using the change-in-wettability and disposing the photocatalyst-containing layer in the way that a prescribed gap exists between the two layers and thereafter radiating light energy in the above-described way, it is possible to form the change-in-wettability layer, i.e. a pattern on the orientation film where the wettability in each region is different. Therefore, the wettability pattern can be very easily formed on the orientation film and it is possible to easily form the orientation film wherein the orientation within the pixel is excellent.

In the present invention, preferably, the photocatalyst-containing layer side substrate comprises a base material member and a photocatalyst-containing layer that has formed, on the substrate, into a pattern configuration. This is because, by forming the photocatalyst-containing layer into a pattern configuration like that, it becomes possible to form on the change-in-wettability layer a pattern including the water-repellent region and the hydrophilic region, which are different from each other in terms of the wettability, without using a photo-mask. In addition, since only the surface of contact with the photocatalyst-containing layer changes into the hydrophilic region, the energy that is to be radiated is not particularly limited to parallel rays of energy and, also, the radiation direction of the energy is not particularly limited. Therefore, there is the advantage that the kinds of energy sources and the degree of freedom in which they are disposed greatly increase.

Also, the photocatalyst-containing layer side substrate that is prepared in the photocatalyst-containing layer side substrate-preparing process comprises a base material member, a photocatalyst-containing layer formed on the substrate, and a photocatalyst-containing layer side light-shielding portion formed into a pattern configuration; and the radiation of the energy in the pattern-forming process may be performed from the photocatalyst-containing layer side substrate.

By the photocatalyst-containing layer side substrate's having the photocatalyst-containing layer side light-shielding portion in that way, there is no need to use a photo-mask, etc. when performing exposure, which eliminates the necessity of performing positional alignment, etc. with the photo-mask. As a result, it becomes possible to simplify the relevant process.

Further, in the photocatalyst-containing layer side substrate, the photocatalyst-containing layer side light-shielding portion may be formed into a pattern configuration on the base material member; and, further, on the light-shielding portion, there may be formed the photocatalyst-containing layer. Also, in the photocatalyst-containing layer side substrate, the photocatalyst-containing layer may be formed on the base material member and, on this photocatalyst-containing layer, the photocatalyst-containing layer side light-shielding portion may be formed into a pattern configuration.

It is preferable that the photocatalyst-containing layer side light-shielding portion is disposed near to the position of contact with the change-in-wettability layer in terms of the accuracy of the wettability pattern obtained. Therefore, it is preferable to dispose the photocatalyst-containing layer side light-shielding portion at the position. Also, when forming the photocatalyst-containing layer side light-shielding portion on the photocatalyst-containing layer, there is the advantage that the photocatalyst-containing layer side light-shielding portion can be used as a spacer when disposing the photocatalyst-containing layer and the change-in-wettability layer in the wettability pattern-forming process with a gap therebetween.

In the present invention, preferably, the photocatalyst-containing layer is a layer that consists of photocatalyst. The reason for this is as follows. If the photocatalyst-containing layer is a layer that consists only of photocatalyst, it is possible to enhance the efficiency of changing the wettability of the change-in-wettability layer. It is therefore possible to form a wettability pattern on the surface of the orientation film with a high efficiency.

Also, in the present invention, preferably, the photocatalyst-containing layer is a layer that is prepared by forming photocatalyst onto the base material member, as a film, by a vacuum film-making technique. The reason for this is as follows. By forming the photocatalyst-containing layer by a vacuum filmmaking technique in the above-described way, it becomes possible to make the homogeneous layer whose surface is less uneven and whose thickness is uniform and, further, it becomes possible to uniformly and highly efficiently form the wettability pattern with respect to the surface of the change-in-wettability layer.

Also, the photocatalyst-containing layer may be a layer that has photocatalyst and a binder. The reason for this is as follows. By using a binder, it becomes possible to relatively easily form the photocatalyst-containing layer and, as a result, to manufacture a pattern formation at a low cost.

Further, the present invention provides an orientation film-equipped substrate which comprises a substrate, and an orientation film that is formed on the substrate and that has on its surface on a side where a liquid crystal layer is contacted therewith a pattern including a water-repellent region and a hydrophilic region that is a region where the angle of contact with water is smaller than that in the water-repellent region. By the substrate's having the orientation film having a hydrophilic region formed in its water-repellent region in a pattern configuration in the above-described way, when using the substrate in the liquid crystal display device in, for example, vertical orientation mode, it becomes possible, by virtue of the fact that the liquid crystal molecule that is vertically oriented in the water-repellent region gets inclined in the hydrophilic region, to cause orientation/division within a relevant pixel of the liquid crystal molecule that has been vertically oriented.

Also, in the present invention, the orientation film-equipped substrate may be one wherein the liquid crystal layer is disposed on a side where the surface of the orientation film is located, or may be one that has formed on its surface a colored layer; and on the surface of the colored layer there is formed a transparent electrode layer; and on the transparent electrode layer there is formed the orientation film.

Further, also, the present invention provides a liquid crystal display device which comprises:
a color filter side substrate that has a first substrate, a colored layer that is formed on the first substrate, a transparent electrode layer formed on the colored layer, and an orientation film that is formed on the transparent electrode layer and that has on its surface on a side where a liquid crystal layer is contacted therewith a pattern including a water-repellent region and a hydrophilic region that is a region where the angle of contact with water is smaller than that in the water-repellent region, and
an opposing substrate that has a second substrate, a transparent electrode layer formed on the second substrate, and an orientation film that is formed on the surface of the transparent electrode layer and that has on its surface on a side where a liquid crystal layer is contacted therewith a pattern including a water-repellent region and a hydrophilic region that is a region where the angle of contact with water is smaller than that in the water-repellent region,
whereby the orientation film of the color filter side substrate and the orientation film of the opposing substrate are disposed in the way they oppose each other; and
liquid crystal is sealed into between the two orientation films.

The liquid crystal display device is one that has an orientation film having a hydrophilic region formed within its water-repellent region in the form of a pattern. Therefore, for example, in the liquid crystal display device in vertical orientation mode, by virtue of the fact that the liquid crystal molecule that is vertically oriented in the water-repellent region gets inclined in the hydrophilic region, it is possible to cause orientation/division within the pixel of the liquid crystal molecule that has been vertically oriented.

### [BRIEF DESCRIPTION OF DRAWINGS]

FIG. 1 is an explanatory view illustrating a liquid crystal display device in vertical orientation mode;
FIG. 2 is an explanatory view illustrating a conventional example of a liquid crystal display device in vertical orientation mode within a pixel of that the orientation-direction differentiation (division) is made;
FIG. 3 is a plan view illustrating a hydrophilic pattern that is used in the orientation film used in an MVA mode;
FIG. 4 is a plan view illustrating an example wherein a liquid-crystalline molecule is disposed on the hydrophilic pattern illustrated in FIG. 3;
FIG. 5 is a schematic sectional view illustrating a state where the example illustrated in FIG. 4 is viewed from a section thereof;
FIG. 6 is a plan view illustrating a hydrophilic pattern that is used in the orientation film used in an IPS mode;
FIG. 7 is a plan view illustrating an example wherein a liquid-crystalline molecule is disposed on the hydrophilic pattern illustrated in FIG. 6;
FIG. 8 is a schematic sectional view illustrating a state where the example illustrated in FIG. 7 is viewed from a section thereof;
FIG. 9 is a plan view illustrating a hydrophilic pattern that is used in the orientation film used in a TN mode;
FIG. 10 is a plan view illustrating an example wherein a liquid-crystalline molecule is disposed on the hydrophilic pattern illustrated in FIG. 9;
FIG. 11 is a schematic sectional view illustrating a state where the example illustrated in FIG. 10 is viewed from a section thereof;
FIG. 12 is a schematic sectional view illustrating an example of a photocatalyst-containing layer side substrate that is used in the present invention;
FIG. 13 is a schematic sectional view illustrating another example of the photocatalyst-containing layer side substrate that is used in the present invention;
FIG. 14 is a schematic sectional view illustrating still another example of the photocatalyst-containing layer side substrate that is used in the present invention;
FIG. 15 is a schematic sectional view illustrating a further example of the photocatalyst-containing layer side substrate that is used in the present invention;
FIG. 16 is a schematic sectional view illustrating an example of an orientation film-equipped substrate according to the present invention;
FIG. 17 is a schematic sectional view illustrating another example of the orientation film-equipped substrate according to the present invention;
FIG. 18 is a schematic sectional view illustrating still another example of an orientation film-equipped substrate according to the present invention;
FIG. 19 is a schematic sectional view illustrating an example of a liquid crystal display device according to the present invention; and
FIG. 20 is a schematic sectional view illustrating a vertical orientation mode of liquid crystal display device that includes an orientation film according to an embodiment of the present invention.

### [BEST MODE FOR CARRYING OUT THE INVENTION]

Hereinafter, the present invention will be concretely explained. The present invention includes an orientation film, a method of manufacturing the orientation film, an orientation film-equipped substrate, and a liquid crystal display device. Hereinafter, each of these will be explained, individually, under its relevant item.

### A. Orientation film

An orientation film according to the present invention is characterized by having on the surface where a liquid crystal layer is contacted therewith a pattern that includes a water-repellent region and a hydrophilic region where the angle of contact with water is smaller than that in the water-repellent region.

In the present invention, by the surface of the orientation film being defined as being the water-repellent region and by the pattern of hydrophilic region being formed within the water-repellent region in the above-described way, it becomes possible to perform orientation of the liquid crystal molecule within a relevant pixel. The reason for this is as follows.

In, for example, a liquid crystal display device in vertical orientation mode (hereinafter also referred to as "MVA mode" as the occasion demands), on the surface of the orientation film having water repellency that is located within a region forming the relevant pixel, a prescribed pattern of hydrophilic region is formed. The liquid-crystalline molecule is vertically oriented within the water-repellent region and is slightly obliquely oriented within the hydrophilic region. Accordingly, by adjusting the degree of wettability, configuration, etc. of this hydrophilic region, it becomes possible to control the orientation direction of the liquid-crystalline molecule in the same pixel so that it may be differentiated, or divided, into two, or four, different directions. Accordingly, by using the orientation film, it is possible to provide a liquid crystal display device that has less dependency on the viewing angle.

Also, in a case where the liquid crystal molecule is arrayed in parallel with the substrate as in an IPS mode, the TN mode, etc., since the liquid crystal molecule is oriented along the pattern of hydrophilic region, forming a pattern of hydrophilic region shaped like a stripe enables orientation of the liquid crystal molecule. In the present invention, there is the advantage that, by using the technique, it is possible to form an orientation layer without executing a rubbing process that has hitherto been carried out.

### (Water-repellent region and hydrophilic region)

The orientation film according to the present invention is characterized by having formed on the surface where the liquid crystal layer is contacted therewith a pattern including the water-repellent region and the hydrophilic region. This hydrophilic region is not particularly limited but is a region where the angle of contact with water is smaller than that in the water-repellent region. The wettability within the hydrophilic region may be uniform or non-uniform.

Also, the difference in wettability between this region and the water-repellent region is not limited. However, from the standpoint of the ease with which the orientation direction is controlled, etc., it is preferable that the difference between the angle of contact with water in the water-repellent region and that in the hydrophilic region falls within a range of from 10° to 120°, especially a range of from 60° to 120°.

For the material from which the hydrophilic region and the water-repellent region are formed, ordinarily, the same material is used, and, preferably, surface treatment of the surface thereof using photocatalyst-containing layer, etc. as later described, is used to produce the difference in terms of the wettability. However, the present invention is not particularly limited thereto, and a different material may be used for forming the hydrophilic region and for forming the water-repellent region.

The pattern configuration of the hydrophilic region within the region where the relevant pixel is formed can be various depending on the type of liquid crystal display device in which the orientation film is used.

For instance, in a liquid crystal display device in MVA mode, any pattern may be used if it is a type that, within the pixel thereof, is able to divide and control the orientation direction of the liquid crystal molecule. The pattern is different depending on the difference in wettability between the hydrophilic region and the water-repellent region, the kind of the liquid-crystalline molecule, etc. Therefore, it is appropriately determined according to the conditions that are relevant.

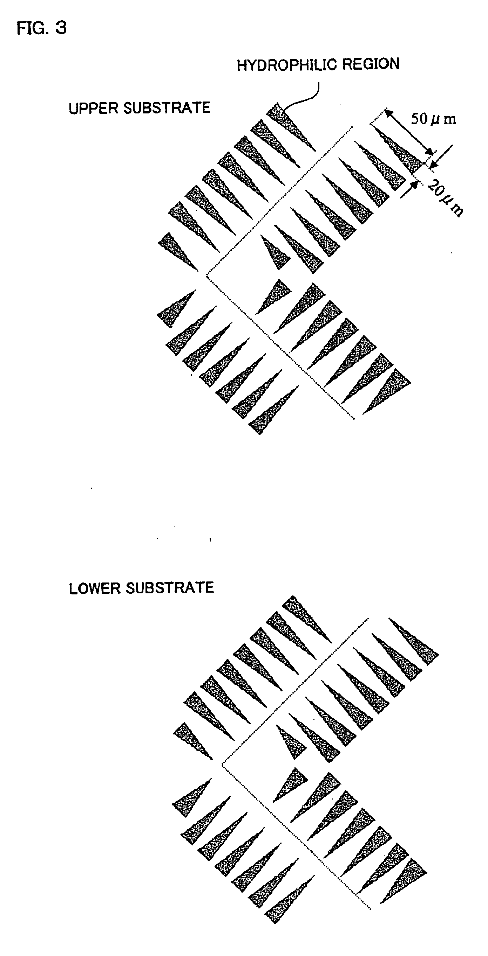

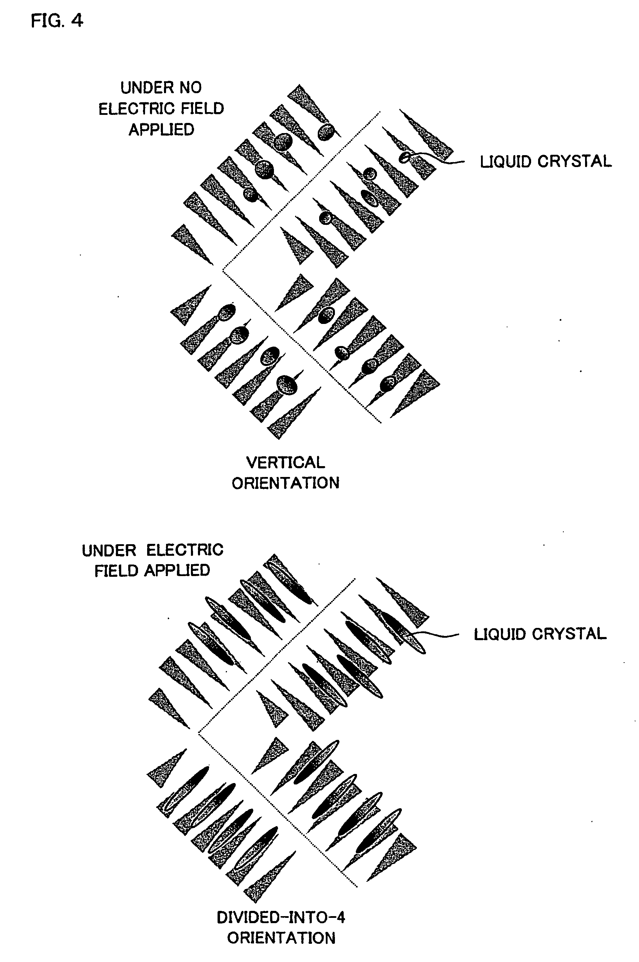

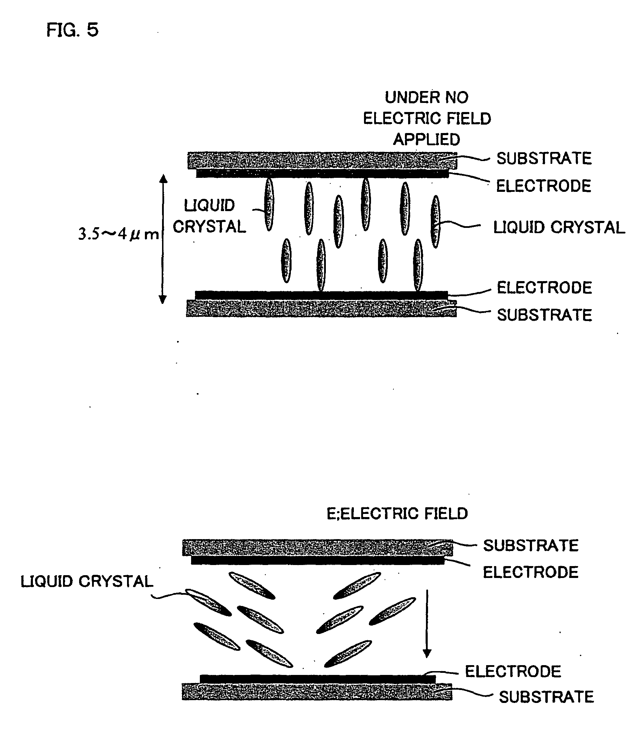

A pattern where, as illustrated in FIG. 3, the hydrophilic region is arrayed in the form of a wedge can be used as an example. If the pattern is like that, the liquid crystal molecule that is vertically disposed in a state of no electric field's being applied becomes oriented along the wedge type pattern as a result of an electric field's being applied, as illustrated in FIG. 4. Therefore, it becomes possible, within the same pixel, to control the orientation direction of the liquid-crystalline molecule so that the direction may become four different directions. Thereby, the liquid crystal display device can be made less dependent on the viewing angle. The pattern of hydrophilic region, preferably, is formed, as a pattern, on either of both the color filter side substrate and the opposing side substrate. Incidentally, FIG. 5 illustrates a state where the liquid crystal molecule is viewed in section.

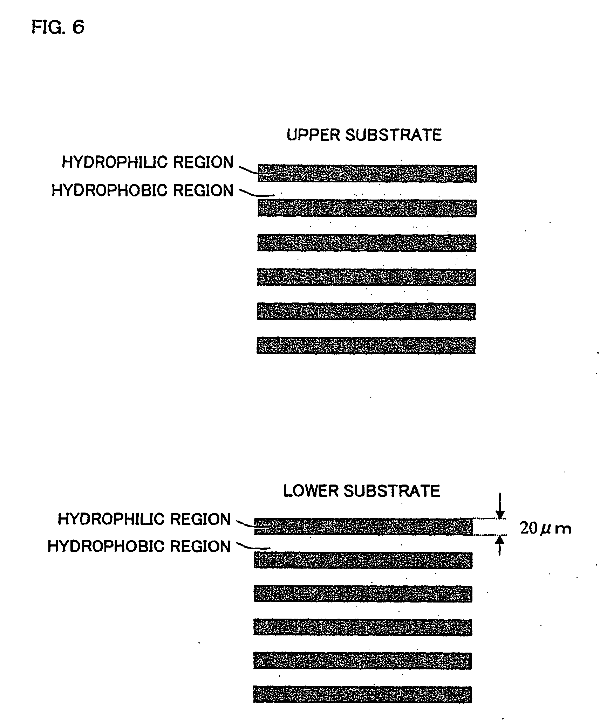

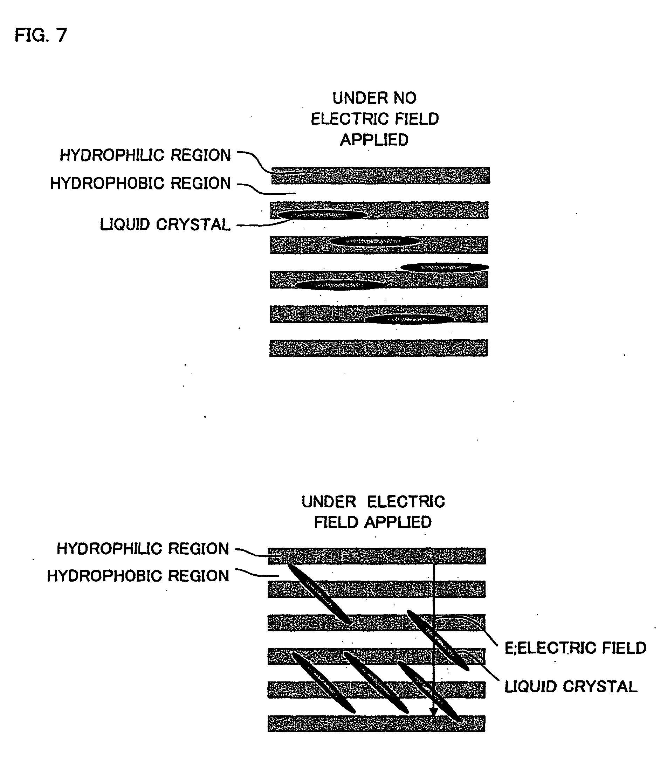

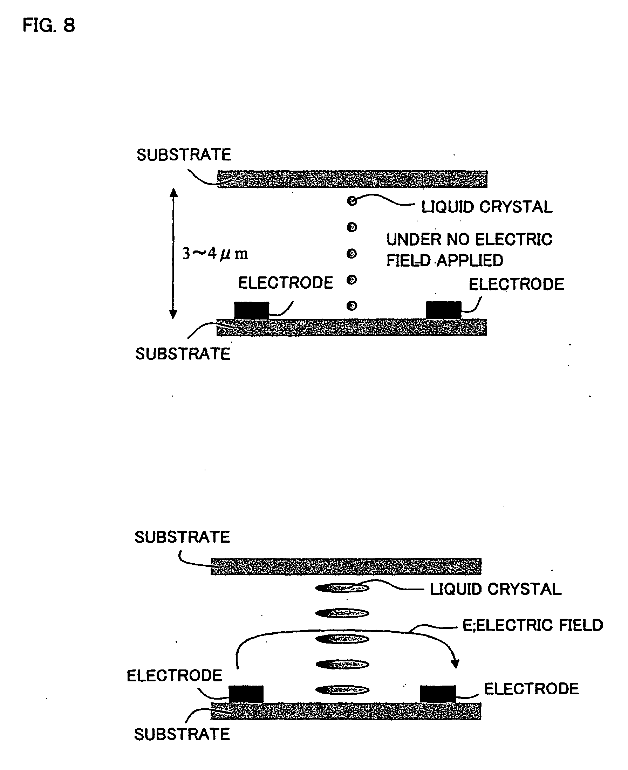

Also, in the liquid crystal display device in IPS mode, as illustrated in FIG. 6, the hydrophilic region is patterned like a stripe. In this case, for example, on either of an upper substrate that is the color filter side substrate and a lower substrate that is the opposing substrate, the pattern is formed in parallel with another pattern that is adjacent thereto. By the stripe pattern's of hydrophilic region being formed in parallel on either substrate of the upper substrate and lower substrate in that way, as illustrated in FIG. 7, when no electric field is being applied, the liquid crystal molecule is brought to a state of its being oriented in parallel with the hydrophilic region. Also, when an electric field is applied, the liquid crystal region becomes oriented in a direction that intersects the stripe pattern of hydrophilic region. Incidentally, FIG. 8 illustrates a state that appears when the liquid crystal molecule is viewed in section.

By forming the hydrophilic region into a configuration of stripe in the above-described way, it becomes possible to orient the liquid-crystalline molecule without executing relevant rubbing process with respect to the orientation film.

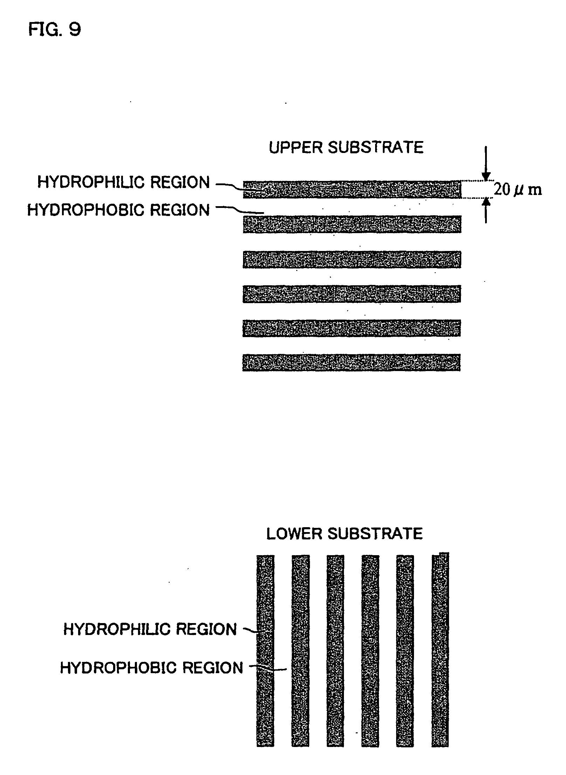

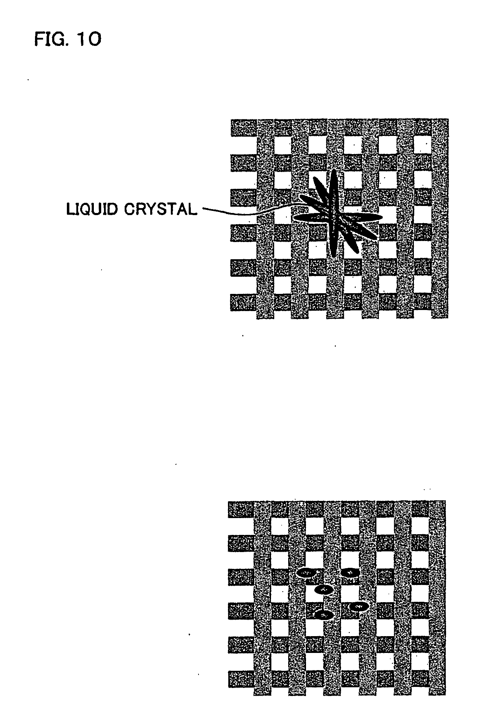

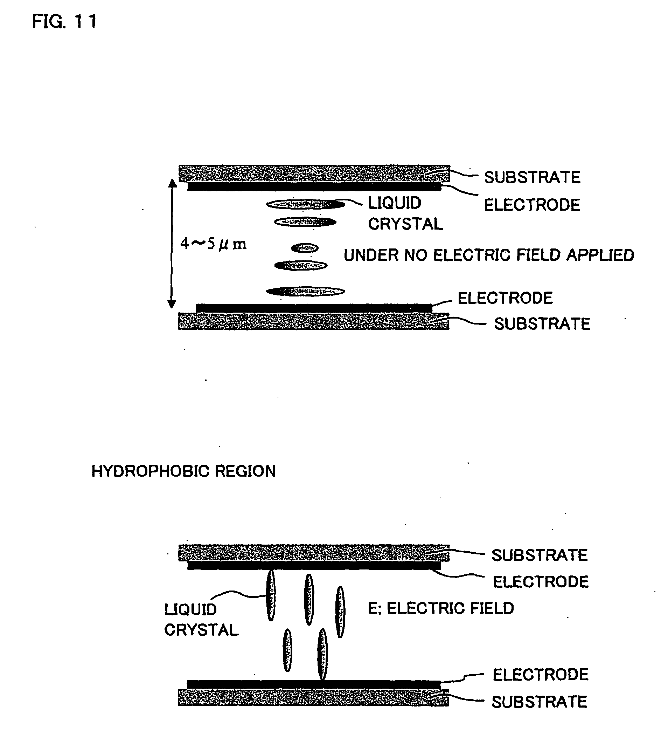

Further, in the liquid crystal display device in TN mode, although, as illustrated in FIG. 9, the hydrophilic region is patterned in the form of a stripe, in the case of the TN mode, the stripe is formed, for example, so that the stripe on an upper substrate that is the color filter side substrate and that on a lower substrate that is the opposing substrate intersect each other at a right angle. By the stripe pattern being formed in the above-described way, the liquid crystal molecule becomes oriented, when no electric field is being applied, into a state of its being twisted 90 degrees from the lower substrate toward the upper substrate, as illustrated in FIG. 10. Also, when an electric field is applied, the liquid crystal molecule is oriented vertically, or perpendicularly, to the substrate. This state is illustrated in FIG. 11 that illustrates a state that appears when the liquid crystal molecule is viewed in a section.

In this case as well, it is possible to use the orientation film to orient the liquid crystal molecule, without rubbing the orientation film.

Also, the area ratio between the hydrophilic region and the water-repellent region within the region where the pixel is formed differs greatly according to the type, the conditions, etc. of the liquid crystal display device, as in the case of the above-described configuration of the pattern of hydrophilic region. However, where the hydrophilic region is excessively large, control ordinarily becomes difficult, etc. Under the assumption that the region where the pixel is formed is 100%, the hydrophilic region is formed within a range of from 0.1% to 90%, especially a range of from 0.1% to 50%.

On the other hand, the water-repellent region is ordinarily one, such as that described above, where surface treatment that uses a photocatalyst-containing layer, etc. is not performed. However, the present invention is not limited thereto. For instance, the pattern of water-repellent region may be the one obtained by performing surface treatment with respect to the original water-repellent region.

This water-repellent region is not particularly limited but it is the region where the angle of contact with water is greater than that in the hydrophilic region. However, in order to vertically orient the liquid crystal molecule, it is preferable that the water-repellent region has a prescribed level of water repellency. From that viewpoint, in the present invention, the angle of contact with water in the water-repellent region, preferably, is set to fall within a range of from 40° to 120°, especially a range of from 70° to 120°.

Incidentally, the "angle of contact with water" in the present invention is an angular value that is obtained by measuring the angle of contact with water (in 30 sec. after dropping liquid droplets from the micro-syringe) by using an angle of contact measuring instrument (CA-Z type made by Kyowa Interface Science Inc.).

### (Material for orientation film)

The material for the orientation film according to the present invention is not particularly limited if it has the above-described water-repellent region and hydrophilic property. However, a high-molecular material having a prescribed side chain is suitably used for the following reasons.

First, as later described, in the present invention, it is preferable to form a pattern of hydrophilic region by performing surface treatment on the surface of the water-repellent region using a photocatalyst-containing layer. However, when, in the surface treatment using a photocatalyst-containing layer, the relevant material has, for example, an alkyl group or fluorine-containing alkyl group as the side chain, the difference in wettability between the regions appears more easily when the surface treatment has been performed. Therefore, such material is preferable in that respect.

Also, as another reason, the following can be said. Although in the water-repellent region according to the present invention, it is preferable that the liquid crystal molecule be vertically oriented, in a case where the relevant material has a prescribed number of chains in addition to its water repellency and rubbing processing is performed on the material the liquid crystal molecule can be more effectively oriented.

Although the side chain is not particularly limited, normal alkyl group or fluorine-containing alkyl group the number of carbons of which falls within a range of from 4 to 22, preferably from 5 to 10 can be used as examples.

Also, in the present invention, it is preferable that, in the water-repellent region, the side chain is 5% by weight or more based upon the total weight. The reason for this is that, if the density of the side chain is in that range, the water-repellent region exhibits sufficiently ability to orient the liquid-crystalline molecule.

On the other hand, although the principal chain that has the above-described side chain is not limited, it preferably is polyimide-, polyamide-, or polysiloxane-based principal chain material.

Hereinafter, an explanation will be given of those materials that are preferable for use as the orientation film under separate items of polyimide-based, polyamide-based, and polysiloxane-based, material.

### a. Polyimide-based

Polyimide resin that is used as the material for the orientation film according to the present invention, preferably, has polyimide prepared by reaction and polymerization of at least a tetracarboxylic acid component and a diamine component containing a linear alkyl group and making the resulting material a polyimide precursor containing a linear alkyl group and imidizing the precursor.

In the present invention, as the polyimide, the polyimide that is disclosed in, for example, Japanese Patent Application Laid-Open No. 6-3678 can be used. The polyimide containing a linear alkyl group is polyimide that is prepared by causing reaction and polymerization between a tetracarboxylic acid component and a diamine component not containing a linear alkyl group and/or a diamine component containing a linear alkyl group and/or a monoamine containing a linear alkyl group and/or a dicarboxylic acid component containing a linear alkyl group, and thereby making the resulting material a polyimide precursor containing a linear alkyl group, and imidizing the precursor.

More specifically, a material that is obtained by mixing a diimide compound containing a linear alkyl group with respect to polyimide not containing a linear alkyl group may be used, and, as the polyimide side chain, polyimide containing a linear alkyl group. A material that is obtained by reaction of a linear alkyl group with the molecular chain terminal of polyimide not containing a linear alkyl group may be used. However, in order to obtain the stable vertical orientation that is intended to be achieved by the present invention, the material must contain whole linear alkyl group of 12 or more carbons whose content, when calculated in terms of the weight of the alkyl group, is 5% or more based upon the total weight of polyimide.

The tetracarboxylic acid component that is used to obtain polyimide used in the present invention is not limited. As examples, it includes aromatic carboxylic acids, such as pyromellitic acid, 2,3.6,7-naphthalene tetracarboxylic acid, 1,2,5,6-naphthalene tetracarboxylic acid, 1,4,5,8-naphthalene tetracarboxylic acid, 2,3,6,7-anthracene tetracarboxylic acid, 1,2,5,6-anthracene tetracarboxylic acid, 3,3',4,4'-biphenyl tetracarboxylic acid, 2,3,3',4-biphenyl tetracarboxylic acid, bis(3,4-dicarboxyl phenyl)ether, 3,3',4,4'-benzophenone tetracarboxylic acid, bis(3,4-dicarboxyphenyl)sulfone, bis(3,4-dicarboxyphenyl)methane, 2,2-bis(3,4-dicarboxyphenyl)propane, 1,1,1,3,3,3-hexafluoro-2,2-bis(3,4-dicarboxyphenyl)propane, bis(3,4-dicarboxyphenyl)dimethyl silane, bis(3,4-dicarboxyphenyl)diphenyl silane, 2,3,4,5-pyridine tetracarboxylic acid, or 2,6-bis(3,4-dicarboxyphenyl)pyridine, dianhydrides thereof, and dicarboxylic acid diacid halides thereof, cycloaliphatic tetracarboxylic acids, such as 1,2,3,4-cyclobutane tetracarboxylic acid, 1,2,3,4-cyclopentane tetracarboxylic acid, 1,2,4,5-cyclohexane tetracarboxylic acid, 2,3,5-tricarboxy cyclopentyl acetic acid, 3,4-dicarboxy-1,2,3,4-tetrahydro-1-naphthalene succinic acid, dianhydrides thereof, and dicarboxylic acid diacid halides thereof, and aliphatic tetracarboxylic acids, such as 1,2,3,4-butane tetracarboxylic acid, dianhydrides thereof, and dicarboxylic acid diacid halides thereof.

Especially preferable, from the viewpoint of the transparency of the coating film, are cycloaliphatic tetracarboxylic acids, dianhydrides thereof, and dicarboxylic acid diacid halides thereof. Further, 1,2,3,4-cyclobutane tetracarboxylic acid dianhydrides are preferable. Also, tetracarboxylic acid and one, or two or more, kinds of derivatives thereof can also be used in a form where they are mixed together.

The diamine component that does not contain a linear alkyl group, which is used to obtain polyimide used in the present invention, is a diamine that is generally used to synthesize polyimide, and is not limited.

The diamine includes, for example, aromatic diamines, such as p-phenylene diamine, m-phenylene diamine, 2,5-diamino toluene, 2,6-diamino toluene, 4,4'-diamino biphenyl, 3,3'-dimethyl-4,4'-diamino biphenyl, 3,3'-dimethoxy-4,4'-diamino biphenyl, diamino diphenyl methane, diamino diphenyl ether, 2,2-diamino diphenyl propane, bis(3,5-diethyl-4-amino phenyl)methane, diamino diphenyl sulfone, diamino benzophenone, diamino naphthalene, 1,4-bis(4-amino phenoxy)benzene, 1,4-bis(4-amino phenyl)benzene, 9,10-bis(4-amino phenyl)anthracene, 1,3-bis(4-amino phenoxy)benzene, 4,4'-bis(4-phenoxy)diphenylsulfone, 2,2-bis[4-(4-amino phenoxy)phenyl]propane, 2,2-bis(4-amino phenyl)hexafluoropropane, or 2,2-bis[4-(4-amino phenoxy)phenyl]hexafluoropropane, cycloaliphatic diamines, such as bis(4-amino cyclohexyl)methane, or bis(4-amino-3-methyl cyclohexyl)methane, aliphatic diamines such as tetramethylene diamine, hexamethylene diamine, etc., and, further, diaminocyloxanes such as that which is expressed by the chemical formula: 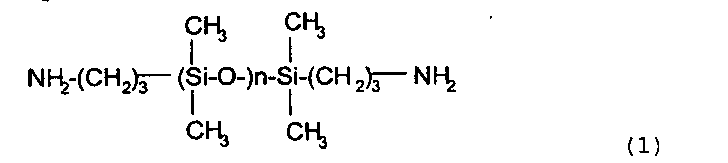 (where the n represents an integer of from 1 to 10 inclusive).

Also, one, or two or more, kinds of these diamines can be used in a form wherein they are mixed together, too. The examples of the diamine components each of which contains a linear alkyl group that is used to obtain polyimide used in the present invention include diamino benzene derivatives such as those expressed by the following chemical formula (2), diamino phenyl derivatives such as those expressed by the following chemical formula (3), diamino turphenyl derivatives such as those expressed by the following chemical formula (4), diamino diphenyl ether derivatives such as those expressed by the following chemical formula (5), diphenyl methane derivatives such as those expressed by the following chemical formula (6), and bis(amino phenoxy)phenyl derivatives such as those expressed by the following chemical formula (7). The R in each formula is a linear alkyl group, alkyloxy group, alkyloxy methylene group, etc. with 12 or more carbons.

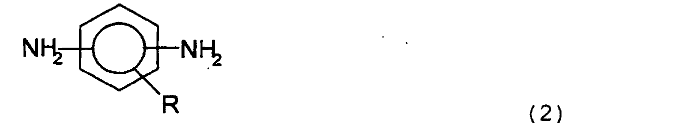

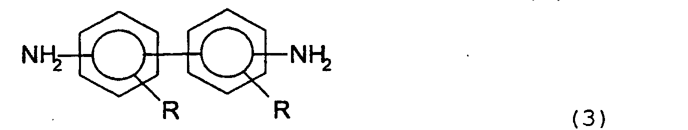

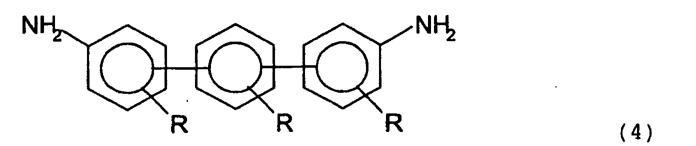

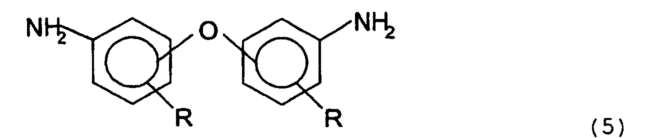

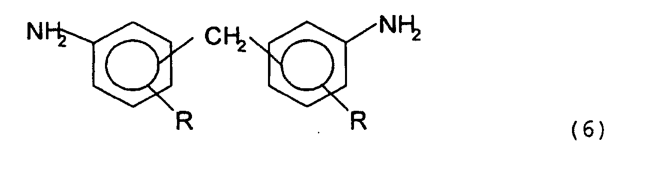

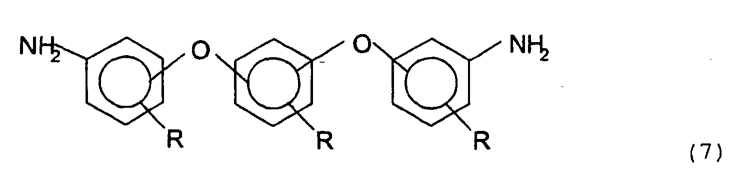

Also, one, or two or more, kinds of these alkyl diamines can also be used in a form wherein they are mixed together. The examples of the monoamine that contains a linear alkyl group and that is used to obtain polyimide used in the present invention include aliphatic amines such as those expressed by the following chemical formula (8), cycloaliphatic diamines such as those expressed by the following chemical formula (9), and aromatic amines such as those expressed by the following chemical formula (10). The R in each formula is a linear alkyl group, alkyloxy group, alkyloxy methylene group, etc. with 12 or more carbons.

Also, one, or two or more, kinds of these alkyl diamines can also be used in a form wherein they are mixed together.

**NH**_{**2**}**-R** (8)

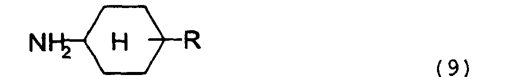

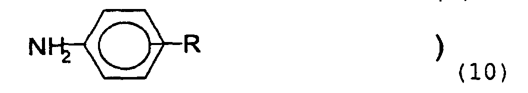

The examples of the dicarboxylic acid component that contains a linear alkyl group and that is used to obtain polyimide used in the present invention include aliphatic dicarboxylic acids such as those expressed by the following chemical formula (11), acid anhydrides thereof, and acid halides thereof, cycloaliphatic dicarboxylic acids such as those expressed by the following chemical formula (12), acid anhydrides thereof, and acid halides thereof, and aromatic dicarboxylic acids such as those expressed by the following chemical formula (13), acid anhydrides thereof, and acid halides thereof. The R in each formula is a linear alkyl group, alkyloxy group, alkyloxy methylene group, etc. with 12 or more carbons.

Also, one, or two or more, kinds of these dicarboxylic acid components can also be used in a form wherein they are mixed together.

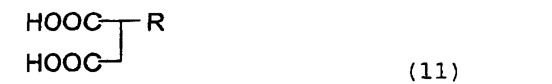

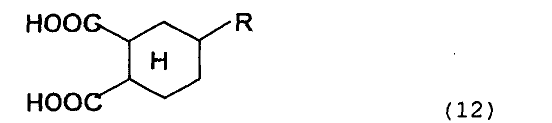

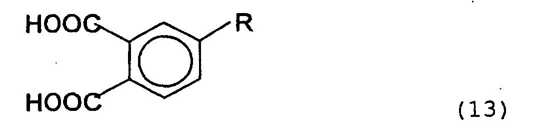

For obtaining the above-described materials, reaction and polymerization of the tetracarboxylic acid component and the diamine component to thereby produce a polyimide resin precursor and then dehydration, ring closure, and imidizing is performed. Generally, as the tetracarboxylic component, there is used tetracarboxylic acid dianhydride. The ratio of the total number of moles of the tetracarboxylic acid dianhydride to that of the diamine component, preferably, is in a range of from 0.8 to 1.2. As in the case of an ordinary polycondensation reaction, the nearer to 1 the molar ratio is, the higher the polymerization degree of the polymer produced is.

If the polymerization degree is excessively low, at the time when using that material as the orientation film, the strength of the resulting polyimide film is insufficient with the result that the orientation of the liquid crystal molecule becomes unstable. Also, if the polymerization degree is excessively high, in some cases the operating efficiency at the time of forming a polyimide resin film is bad. Accordingly, the polymerization degree of the product obtained from the reaction, preferably, is set, when calculated in terms of reduced viscosity of the polyimide precursor solution, to fall within a range of from 0.05 to 3.0 dl/g (having a concentration of 0.5g/dl in the solution of N-methyl pyrrolidone at 30°C).

Also, as one of the methods for obtaining the polyimide containing linear alkyl group which is used in the present invention, there is mixing a diimide compound containing a linear alkyl group into the relevant material. For obtaining that diimide compound, there is a method of reaction of the dicarboxylic acid component and the diamine component containing a linear alkyl group in a molar ratio of 2:1 to make the resulting material a diimide compound precursor and then performing dehydration, ring closure, and imidizing and/or reaction of the monoamine component containing therein a linear alkyl group and the tetracarboxylic acid dianhydride in a molar ratio of 2:1 to make the resulting material a diimide compound precursor and then performing dehydration, ring closure, and imidizing.

Further, as one of the methods for obtaining the polyimide according to the present invention that contains a linear alkyl group, there is a method of introducting a linear alkyl group into the terminal of the molecular chain of polyimide. In the case of this method, there is a method that, when reacting and polymerizating the tetracarboxylic acid component and the diamine component, is reaction of a dicarboxylic acid component containing a linear alkyl group and/or a method that, when reacting and polymerizating of the tetracarboxylic acid component and the diamine component, is reaction of the monoamine component containing a linear alkyl group. When reacting the dicarboxylic acid component containing a linear alkyl group, the ratio a/b of the total number (a) of moles of the carboxylic acid residues of the tetracarboxylic acid component and dicarboxylic acid component to the total number (b) of moles of the amine residue of the diamine component, preferably, is 2 or less. Also, when reacting of the monoamine component containing a linear alkyl group, the ratio a'/b' of the total number (a') of moles of the carboxylic acid residue of the tetracarboxylic acid component to the total number (b') of moles of the amine residues of the diamine component and monoamine component, preferably, is 2 or more.

Where the molar ratio a/b is 2 or more, or the molar ratio a'/b' is 2 or less, when after the relevant material is formed into a polyimide precursor this precursor is subjected to dehydration, ring closure, and imidizing, the reaction of the dicarboxylic acid component or monoamine component is insufficient. As a result of this, when the resulting material is used as the liquid crystal orientation processor, there is a possibility that it will badly affect the properties of the liquid crystal. Generally, the tetracarboxylic acid component, diamine component, dicarboxylic acid component, or monoamine component is reacted in an organic-polar solvent such as N-methyl pyrrolidone, N, N-dimethyl acetamide, or N, N-dimethyl formamide.

The reaction temperature at which these materials are reacted to obtain a polyimide precursor can be arbitrarily selected from a range of from -20 to 150°C, or preferably from a range of from -5 to 100°C.

Further, by heating and dehydrating of the polyimide precursor may be performed at a temperature of from 100 to 400°C, or imidizing may be performed by using ordinary imidizing catalyst, such as triethyl amine/acetic anhydride.

### b. Polyamide

As the polyamide used in the present invention, there can be used, for example, the polyamide that is disclosed in Japanese Patent Application Laid-Open No. 9-230354.

Specifically, an example is the polyamide the cyclic unit of which can be expressed by the following general formula (14): 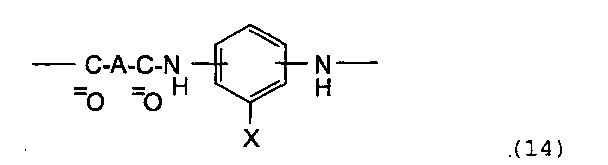 (in the formula (14), A represents a bivalent organic group that constitutes dicarboxylic acid; and X represents the substituent group that is expressed by the following general formula (15):

**―Y**^{**1**}**-R**^{**1**} (15)

or the following general formula (16): 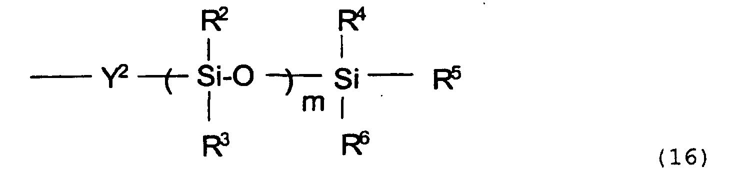 and in the formula (15) or (16) above, Y¹ represents an oxygen atom or a bivalent group that is expressed by -CH₂O-, -C(=O)O- or -OC(=O)-; R¹ represents an alkyl group, or fluorine-containing alkyl group, the number of carbons in which is from 8 to 22 inclusive; Y² represents a bivalent organic group that is expressed by -(CH₂)ₙ-, -O(CH₂)ₙ-, -CH₂O(CH₂)ₙ-, -C(=O)O(CH₂)ₙ-, or -OC(=O) (CH₂)ₙ- (n represents an integer of from 2 to 6 inclusive); R² to R⁶ each may be the same or different and each represent an alkyl group that has a number of carbons of from 1 to 6 inclusive; and m represents an integer of 1 or more) and the weight average molecular weight of that is 1000 or more, etc.

As the alkyl group that is represented by the R¹ in the general formula (15), examples are linear alkyl groups such as octyl group, nonyl group, undecyl group, decyl group, dodecyl group, tridecyl group, tetradecyl group, pentadecyl group, hexadecyl group, heptadecyl group, octadecyl group, eicosanyl group, and docosanyl group as well as branched alkyl groups such as 1-ethyl hexyl group, 2-ethyl hexyl group, 3-ethyl hexyl group, 1-methyl heptyl group, 2-methyl heptyl group, 3-methyl heptyl group, 1-methyl octyl group, 2-methyl octyl group, 2-ethyl octyl group, 1-methyl decyl group, 2-methyl decyl group, 3-methyl decyl group, 1-methyl dodecyl group, 1-methyl tetradecyl group, 1-methyl hexadecyl group, 1-methyl octadecyl group, 1-methyl eicosanyl group, and 2-ethyl eicosanyl group.

Also, as the fluorine-containing alkyl group that is represented by the R¹, examples are alkyl groups wherein one or more of the hydrogen atoms have been substituted by fluorine atoms. However, particularly preferable are perfluoro octyl group, perfluoro nonyl group, perfluoro undecyl group, perfluoro decyl group, perfluoro dodecyl group, perfluoro tridecyl group, perfluoro tetradecyl group, perfluoro pentadecyl group, perfluoro hexadecyl group, perfluoro heptadecyl group, perfluoro octadecyl group, perfluoro eicosanyl group, perfluoro docosanyl group, 1H,1H-pentadecafluoro octyl group, 1H,1H-heptadecafluoro nonyl group, 1H,1H-nonadecafluoro decyl group, 1H,1H-henicosafluoro undecyl group, 1H,1H-tricosafluoro dodecyl group, 1H,1H-pentacosafluoro tridecyl group, 1H,1H,2H,2H-tridecafluoro octyl group, 1H,1H,2H,2H-heptadecafluoro decyl group, 1H,1H,2H,2H-henicosafluoro dodecyl group and 1H,1H,2H,2H-pentacosafluoro tetradecyl group, 1H,1H,2H,2H-pentacosafluoro tetradecyl group, etc. Incidentally, each of the above-described alkyl group and fluorine-containing alkyl group may be arbitrarily different in every cyclic unit.

Also, as the alkyl group that is represented by the R² to R⁶ in the general formula (16), examples are a linear or branched lower alkyl group such as a methyl group, ethyl group, propyl group, isopropyl group, butyl group, isobutyl group, t-butyl group, pentyl group, or hexyl group. However, from the viewpoint of the ease with which the relevant materials are synthesized and of their properties as the liquid crystal orientation film, among the substituent groups that have been enumerated above, the methyl group is the most preferable.

### c. Polysiloxane

From the viewpoint of performing surface treatment with the photocatalyst-containing layer as later described, the preferable material used for the orientation layer according to the present invention is the material the wettability of which is changed, by exposure, due to the action of the photocatalyst in the photocatalyst-containing layer it contacts with and which has a principal chain unlikely to deteriorate and be decomposed due to the action of the photocatalyst. From this point of view, organopolysiloxane is the preferable material. In the present invention, preferably, the organopolysiloxane contains a fluoroalkyl group.

As the organopolysiloxane, examples that are organopolysilixanes, through sol/gel reaction or the like, are formed by (hydrolysis and) polycondensation of chloro silaneor alkoxysilane or the like, thereby exhibiting a high level of strength.

In that case, preferably, the organopolysiloxane is a hydrolytic condensate or co-hydrolytic condensate of one, or two or more, kinds of a silicon compound that is expressed by the general formula:

YₙSiX(₄₋ₙ₎

(where Y represents an alkyl group, fluoroalkyl group, vinyl group, amino group, phenyl group or epoxy group; X represents an alkoxyl group, acetyl group, or halogen; and n represents an integer of from 0 to 3 inclusive.). Incidentally, here, the groups that each are represented by the Y preferably each have a number of carbons from 1 to 20 inclusive, and, also, the alkoxy groups that each are represented by the X, preferably, are methoxy group, ethoxy group, propoxy group, or butoxy group.

Also, preferably anorganopolysiloxane is used that contains, especially as a side chain, a fluoroalkyl group as illustrated below. In more detail, examples of the hydrolytic condensate and co-hydrolytic condensate of one, or two or more, kinds of the fluoro alkylsilane are illustrated below.

CF₃(CF₂)₃CH₂CH₂Si(OCH₃)₃;

CF₃(CF₂)₅CH₂CH₂Si(OCH₃)₃;

CF₃(CF₂)₇CH₂CH₂Si(OCH₃)₃;

CF₃(CF₂)₉CH₂CH₂Si(OCH₃)₃;

(CF₃)₂CF(CF₂)₄CH₂CH₂Si(OCH₃)₃;

(CF₃)₂CF(CF₂)₆CH₂CH₂Si(OCH₃)₃;

(CF₃)₂CF(CF₂)₈CH₂CH₂Si(OCH₃)₃;

CF₃(C₆H₄)C₂H₄Si(OCH₃)₃;

CF₃(CF₂)₃(C₆H₄)C₂H₄Si(OCH₃)₃;

CF₃(CF₂)₅(C₆H₄)C₂H₄Si(OCH₃)₃;

CF₃(CF₂)₇(C₆H₄)C₂H₄Si(OCH₃)₃;

CF₃(CF₂)₃CH₂CH₂SiCH₃(OCH₃)₂;

CF₃(CF₂)₅CH₂CH₂SiCH₃(OCH₃)₂;

CF₃(CF₂)₇CH₂CH₂SiCH₃(OCH₃)₂;

CF₃(CF₂)₉CH₂CH₂SiCH₃(OCH₃)₂;

(CF₃)₂CF(CF₂)₄CH₂CH₂SiCH₃(OCH₃)₂;

(CF₃)₂CF(CF₂)₆CH₂CH₂Si CH₃(OCH₃)₂;

(CF₃)₂CF(CF₂)₈CH₂CH₂Si CH₃(OCH₃)₂;

CF₃(C₆H₄)C₂H₄SiCH₃(OCH₃)₂;

CF₃(CF₂)₃(C₆H₄)C₂H₄SiCH₃(OCH₃)₂;

CF₃(CF₂)₅(C₆H₄)C₂H₄SiCH₃(OCH₃)₂;

CF₃(CF₂)₇(C₆H₄)C₂H₄SiCH₃(OCH₃)₂;

CF₃(CF₂)₃CH₂CH₂Si(OCH₂CH₃)₃;

CF₃(CF₂)₅CH₂CH₂Si(OCH₂CH₃)₃;

CF₃(CF₂)₇CH₂CH₂Si(OCH₂CH₃)₃;

CF₃(CF₂)₉CH₂CH₂Si(OCH₂CH₃)₃;

and

CF₃(CF₂)₇SO₂N(C₂H₅)C₂H₄CH₂Si(OCH₃)₃

By using as the orientation layer a polysiloxane that contains, as the side chain, one of the above-enumerated fluoroalkyl groups, the water repellency in the non-exposed portion of the change-in-wettability layer can be greatly enhanced and, in addition, because of the side chain's being formed, the orientation property can be greatly enhanced.

### (Etceteras)

The thickness of the orientation film according to the present invention, it is not limited, but preferably falls within a range of from 10Å to 2000 Å. Also, the film is disposed at a position at which, in a liquid crystal display device in vertical orientation mode, an orientation film is ordinarily disposed, namely sandwiching the liquid crystal layer. Also, although, ordinarily, the orientation film according to the present invention is disposed on either one of the color filter side, or an array substrate side, of the liquid crystal layer, it may be disposed on each side.

### B. Method of manufacturing an orientation film

Next, a method of manufacturing the orientation film of the present invention will be explained. The method of manufacturing the orientation film according to the present invention is characterized by comprising an orientation film-forming process for forming the orientation film on a relevant substrate and a pattern-forming process for forming on the surface of the orientation film a pattern including a water-repellent region and a hydrophilic region that is a region where the angle of contact with water is smaller than that in that water-repellent region.

In the present invention, by simply forming the pattern including the water-repellent region and hydrophilic region on the orientation film in the above-described way, it is possible to orient the liquid crystal molecule within the pixel. Accordingly, where the liquid crystal display device is in MVA mode, it is possible to more easily divide the orientation direction of the liquid crystal molecule within the pixel than by, for example, forming a structural member such as the projecting portion.

### (Orientation film forming process)

In the orientation film-forming process of the present invention, first, an orientation film-forming process for forming the orientation film on the relevant substrate is executed.

Here, as the substrate used in the present invention, a transparent material can be used regardless of whether it is one such as glass that has no flexibility or one such as a resinous film that has flexibility.

Generally, on the substrate, various kinds of functional layers including a transparent electrode layer are formed and, on the resulting structure, the orientation film is formed.

The orientation film-forming process depends greatly on the material used therein. Accordingly, the method of forming the orientation film is suitably selected by considering the material that is used, and, then, the orientation film is formed.

### (Pattern-forming process)

In the present invention, after executing the above-described orientation film-forming process, a pattern-forming process is executed to form a pattern including a water-repellent region and a hydrophilic region where the angle of contact with water is smaller than that in the water-repellent region on the surface of the orientation film.

In the present invention,'the method for forming the above-described pattern including the water-repellent region and hydrophilic region is not limited. For instance, a method of radiating a prescribed radiation such as ultraviolet rays for a long period of time can be issued. However, a method that uses a photocatalyst-containing layer is suitable. The reason for this is that, by using a photocatalyst-containing layer, it is possible to efficiently form the pattern of hydrophilic region within the water-repellent region in a short period of time.

More specifically, it is preferable to use a method of manufacturing an orientation film, wherein the orientation film formed on the substrate is a change-in-wettability layer the wettability on whose surface changes due to the action of photocatalyst; and the pattern-forming process comprises:
a process for preparing a photocatalyst-containing layer side substrate ("photocatalyst-containing layer side substrate-preparing process") the photocatalyst containing a layer side substrate having (a) a photocatalyst and (b) a base material member; and
a photocatalyst-treating process of (a) disposing the photocatalyst-containing layer and the change-in-wettability layer with a gap therebetween of 200µm or less, and then (b) radiating light energy from a prescribed direction onto the resulting arrangement to form a pattern, including a hydrophilic region and a water-repellent region, on the surface of the change-in-wettability layer.

Hereinafter, an explanation will be given of the method of forming a pattern having different regions of wettability using the photocatalyst on the surface of the orientation film.

### 1. Change-in-wettability layer

In the present invention, the orientation film formed on the substrate, preferably, is a change-in-wettability layer the wettability of whose surface changes due to the action of the photocatalyst. As the material of that change-in-wettability layer examples, generally, are a compound that has a side chain comprising an alkyl group, fluorine-containing alkyl group, or the like, which is decomposable by photocatalyst. As that compound, more specifically, examples are polyimide-based compounds, polyamide-based compounds, and polysiloxane-based compounds which were explained under the preceding item "A. Orientation film".

### 2. Photocatalyst-containing layer side substrate-preparing process

The photocatalyst-containing layer side substrate-preparing process according to the present invention is a process for preparing a photocatalyst-containing layer side substrate having a photocatalyst-containing layer containing photocatalyst and a base material member.

The photocatalyst-containing layer side substrate that is manufactured in that process has at least (a) the photocatalyst-containing layer and (b) a base material member and, ordinarily, has a photocatalyst-containing layer shaped like a thin film which has been formed by a prescribed method formed on a base material member. Also, as the photocatalyst-containing layer side substrate, there can be used one having formed thereon a photocatalyst-containing layer side light-shielding portion that has been formed into a pattern.

### a. Photocatalyst-containing layer

The photocatalyst-containing layer used in the present invention is not limited but it has a construction wherein the photocatalyst in the layer causes a change in wettability of the change-in-wettability layer it contacts. The layer may be constructed using photocatalyst and binder, or using a photocatalyst as a simple substance. Also, the wettability of the surface may be hydrophilic or water repellent.

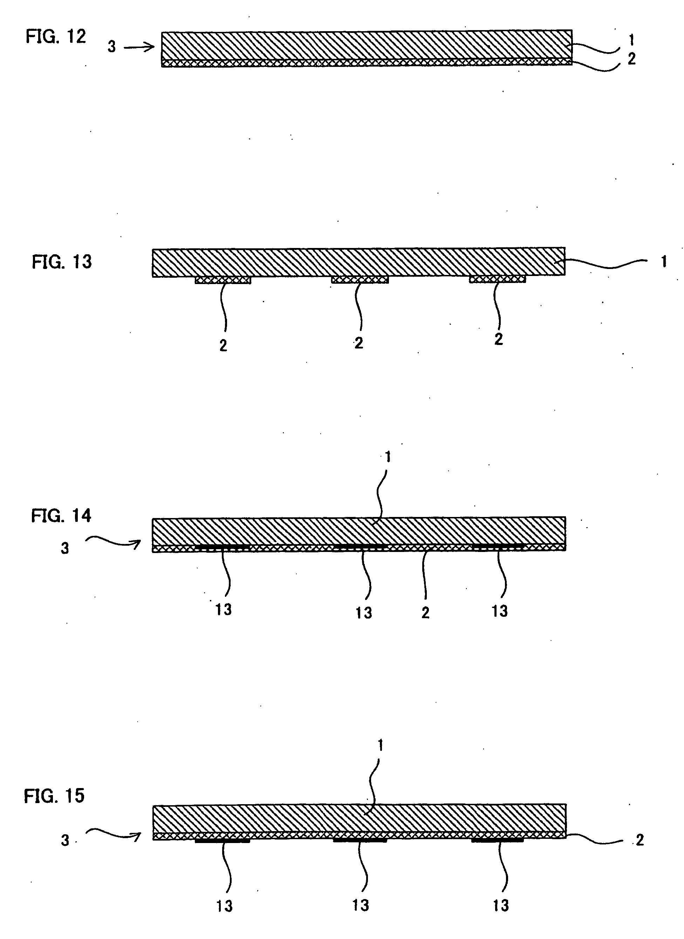

The photocatalyst-containing layer used in the present invention, for example, as illustrated in FIG. 12, may be a photocatalyst-containing layer side substrate 3 made by a photocatalyst-containing layer's 2 being formed on the entire surface of the base material member 1. However, the layer, for example, as illustrated in FIG. 13, may be obtained by a photocatalyst-containing layer's 2 being formed on the base material member in the form of a pattern.

By forming the photocatalyst-containing layer as a pattern, as will later be explained in connection with the photocatalyst treatment process, when radiating light energy with the photocatalyst-containing layer in contact with the change-in-wettability layer, there is no need to perform pattern radiation that uses a photo-mask or the like. By performing radiation of light energy on the entire surface, a pattern of wettability including a hydrophilic region and water-repellent region can be formed on the change-in-wettability layer.

Although the method of patterning the photocatalyst-containing layer is not limited, it can be executed using photolithography or the like.

Also, since the wettability of only the portion of the change-in-wettability layer in actual contact with the photocatalyst-containing layer changes, the radiation direction may be arbitrary only if the direction enables the energy to be radiated onto the portion of contact between the photocatalyst-containing layer and the change-in-wettability layer. Further, there is the advantage that the radiation is not limited to parallel radiation, such as parallel light.

The mechanism of action of the photocatalyst, in the above-described photocatalyst-containing layer (which is represented by titanium dioxide as later described) is not always clear. However, it is considered that the carrier that has been produced by the radiation of light directly reacts with the compounds in its vicinity, or causes the production of active oxygen species from oxygen and water to thereby cause a change in the chemical structure of the organic material. In the present invention, it is thought that the carrier acts on the compounds in the change-in-wettability layer that contactsthe photocatalyst-containing layer.

As the photocatalyst used in the present invention, examples are titanium dioxide (TiO₂) that is known as a photo-semiconductor, zinc oxide (ZnO), tin oxide (SnO₂), strontium titanic acid (SrTiO₃), tungsten oxide (WO₃), bismuth oxide (Bi₂O₃), and iron oxide (Fe₂O₃). One, or two or more of these compounds can be used in a mixed form.

In the present invention, titanium dioxide is especially suitable because the band gap energy is high; it is chemically stable and has no toxicity; and it is easy to obtain. As the titanium dioxide, either anatase or rutile can be used in the present invention. However, anatase titanium dioxide is preferable. Anatase titanium dioxide has an excitation wavelength of 380nm or less.

As the anatase titanium dioxide, examples are anatase type titaniazol of hydrochloric acid peptization type (STS-02 (7nm in average particle size) produced by Ishihara Sangyo Kaisha, Ltd.) or ST-K01 manufactured by Ishihara Sangyo Kaisha, Ltd.), anatase type titaniazol of nitric acid peptization type (TA-15 (12nm in average particle size) produced by Nissan Chemical Industries, Ltd.), etc.

The smaller the particle size of the photocatalyst, the more preferable the photocatalyst is. This is because in that case the photocatalytic reaction occurs more effectively. In more detail, it is preferable to use a photocatalyst the average particle size 50nm or less, more preferable to use a photocatalyst or average particle size 20nm or less.

The photocatalyst-containing layer according to the present invention may be formed using a photocatalyst in an independent form as described above or in a form mixed with a binder.

In the case of a photocatalyst-containing layer consisting of only a photocatalyst, the efficiency with which the wettability on the change-in-wettability layer changes is enhanced, which is advantageous from the viewpoint of cost such as shortening the treating length of time. On the other hand, in the case of a photocatalyst-containing layer consisting of a photocatalyst and a binder, there is the advantage that forming the photocatalyst-containing layer is easy.

As the method of forming a photocatalyst-containing layer consisting of only a photocatalyst, examples are vacuum film-making methods such as a sputtering method, CVD method, and vacuum deposition method. By forming the photocatalyst-containing layer by a vacuum film-making method, the photocatalyst-containing layer can be made of uniform thickness containing only a photocatalyst. As a result of this, it is possible to uniformly change the wettability on the change-in-wettability layer and, because the layer consists of only a photocatalyst, compared to the case where a binder is used, to cause a change in the wettability of the change-in-wettability layer with a high efficiency.

Also, as the method of forming a photocatalyst-containing layer consisting of only a photocatalyst, where the photocatalyst is, for example, titanium dioxide, examples are a method that forms amorphous titania on the base material member and then phase-changes it into crystalline titania by baking, etc. The amorphous titania used here can be obtained by hydrolysis and dehydration condensation of an inorganic salt of titanium such as titanium tetrachloride, titanium sulfate, etc., or by hydrolysis and dehydration condensation of an organic titanium compound such as tetra-ethoxy titanium, tetraisopropoxy titanium, tetra-n-proxy titanium, tetra-butoxy titanium, and tetra-methoxy titanium in the presence of acid. Subsequently, the amorphous titania can be denatured into anatase type titania by baking at a temperature of 400°C to 500°C and then into rutile type titania by baking done at 600°C to 700°C.

Also, in the case of using a binder, using one having a high bond energy, the principal skeleton of which is not decomposed by photo-excitation of the above-described photocatalyst, is preferable, and, examples are a polysiloxane-based material explained under the preceding item "Orientation film", etc.

Where using polysiloxane as the binder, the photocatalyst-containing layer can be formed by dispersing the photocatalyst and polysiloxane binder into a solvent together with additives if necessary and thereby preparing a coating solution and then coating it onto the base material member. As the solvent, an alcoholic organic solvent such as ethanol, isopropanol, etc. is preferable. The coating can be performed by a known coating method such as spin coating, spray coating, dip coating, roll coating, bead coating, etc. In a case where the relevant material contains an ultraviolet ray-hardenable component as the binder, radiating ultraviolet rays is performed to achieve hardening of the binder to enable formation of a photocatalyst-containing layer.

Also, the invention can use an amorphous silica precursor as the binder. This amorphous silica precursor is expressed by the general formula SiX₄ and, in this formula, SiX₄ preferably is a silicon compound containing X groups such as halogen, methoxy group, ethoxy group, or acetyl group, silanol that is a hydrolytic material thereof, or polysiloxane the average molecular weight of which is 3000 or less.

More specifically, the amorphous silica precursor includes as examples tetraethoxy silane, tetraisopropoxy silane, tetra-n-propoxy silane, tetrabutoxy silane, and tetramethoxy silane. Also, in that case, the amorphous silica precursor and the photocatalyst particles are uniformly dispersed in a non-aqueous solvent; the resulting material is hydrolyzed using the water content in the air, so that silanol is formed on the base material member; then the resulting material is subjected to dehydration and condensation/polymerization at normal temperature; and a photocatalyst-containing layer can thereby be formed. If dehydration and condensation/polymerization of silanol are performed at 100°C or more, the polymerization degree of silanol can be increased to increase the strength on the surface of the film layer. Also, the binders can be used individually or in a form wherein two or more of them are mixed together.

The content of the photocatalyst in the photocatalyst-containing layer when using a binder can be set to a range of from 50 to 60% by weight, or preferably to a range of from 20 to 40% by weight. Also, the thickness of the photocatalyst-containing layer preferably is in a range of from 0.05 to 10µm.

Also, the photocatalyst-containing layer can be made to contain a surfactant other than the above-described photocatalyst and binder. Specifically, examples are a hydrocarbon-based nonionic surfactant such as respective series of NIKKOL, BL, BC, BO, and BB that are produced by Nikko Chemicals Co. Ltd. or a fluorine-based, or silicone-based, nonionic surfactant such as ZONYL, FSSN, and FSO that are produced by Du Pont Kabushiki Kaisha, Surflon S-141, 145 that are produced by Asahi Glass Company Megaface F-141, 144 that are produced by Dainippon Ink and Chemicals, Incorporated, Phthagent F-200, F251 that are produced by Neos, UNIDYNE DS-401, 402 that are produced by DAIKIN INDUSTRIES, Ltd., and Fluorad FC-170, 176 that are produced by 3M. Also, it is also possible to use a cationic surfactant, anionic surfactant, or ampholytic suractant.

Other than the above-described surfactants, the photocatalyst-containing layer can also contain oligomers such as polyvinyl alcohol, unsaturated polyester, acrylic resin, polyethylene, diallyl phthalate, ethylene propylene diene monomer, epoxy resin, phenol resin, polyurethane, melamine resin, polycarbonate, polyvinyl chloride, polyamide, polyimide, styrene butadiene rubber, chloropulene rubber, polypropylene, polybutylene, polystyrene, polyvinyl acetate, polyester, polybutadiene, polybenzimidazole, polyacrylnitryl, epichlorohydrin, polysulfide, or polyisoprene, or polymer, etc.

### b. Base material member

In the present invention, as illustrated in FIG. 12, the photocatalyst-containing layer side substrate 3 has at least a base material member 1 and a photocatalyst-containing layer 2 formed on the base material member 1.

At this time, the material constituting the base material member that is used for the substrate is suitably selected depending on the radiation direction of energy in the photocatalyst treatment process that will be described later. Where performing exposure from the rear surface of the photocatalyst-containing layer side substrate in the photocatalyst treatment process as later described, the material needs to be transparent material. However, where exposure is performed from the change-in-wettability layer side, the material is not limited to transparent material.

Also, the base material member used in the present invention may be flexible such as a resinous film or not flexible such as a glass substrate. The material of the base material member, also, is suitably selected depending on the energy radiation method in the photocatalyst treatment process as later described.

The base material member used in the photocatalyst-containing layer side substrate in the present invention is not limited in terms of material. However, since the photocatalyst-containing layer side substrate is repeatedly used, a material that has a prescribed level of physical strength and the surface of which has excellent adhesion to the photocatalyst-containing layer is preferable.

In more detail, examples are glass, ceramic, metal, plastic, etc.

Incidentally, to enhance the adhesion between the surface of the base material member and the photocatalyst-containing layer, a primer layer may be formed on the base material member. As the primer layer, examples are silane-based coupling agent, titanium-based coupling agent, etc.

### c. Photocatalyst-containing layer side light-shielding portion

The photocatalyst-containing layer side substrate used in the present invention, may have a photocatalyst-containing layer side light-shielding portion formed on it in the configuration of a pattern. By using a photocatalyst-containing layer side substrate that has a photocatalyst-containing layer side light-shielding portion, when performing exposure, there is no need either to use a photo-mask or to perform depiction radiation that uses a laser light. Since, accordingly, there is no need to align the photo-mask with the photocatalyst-containing layer side substrate, the process of exposure can be made simple, nor is there any need to use an expensive device as is necessary for performing depiction radiation. Therefore, there is the advantage that using the substrate is advantageous in terms of the relevant cost.

As the photocatalyst-containing layer side substrate that has a photocatalyst-containing layer side light-shielding portion, the following two embodiments can be adopted depending on the position where the photocatalyst-containing layer side light-shielding portion is formed.

One is the embodiment wherein, as illustrated in, for example, FIG. 14, the photocatalyst-containing layer side light-shielding portion 13 is formed on the base material member 1; and on this light-shielding portion 13 the photocatalyst-containing layer 2 is formed to make the resulting arrangement the photocatalyst-containing layer side substrate 3. The other is an embodiment wherein, as illustrated in, for example, FIG. 15, the photocatalyst-containing layer 2 is formed on the base material member 1; and on the member the photocatalyst-containing layer side light-shielding portion 13 is formed to make the resulting arrangement the photocatalyst-containing layer side substrate 3.

In either embodiment, compared with the case when using a photo-mask, the photocatalyst-containing layer side light-shielding portion is disposed nearthe portion of contact between the photocatalyst-containing layer and the change-in-wettability layer. This can lessen the effect of scattering of radiation within, for example, the base material member, which enables very accurately pattern radiation.

Further, in the embodiment where the photocatalyst-containing layer side light-shielding portion is formed on the photocatalyst-containing layer, when disposing the photocatalyst-containing layer and the change-in-wettability layer with a prescribed gap therebetween, the thickness of the photocatalyst-containing layer side light-shielding portion can be made to coincide with the dimension of that prescribed gap beforehand if it is preferable that theybe disposed with a prescribed gap intervening therebetween as later described. By doing so, there is the advantage that the photocatalyst-containing layer side light-shielding portion can be used as a spacer to fix the prescribed gap.

By adhering the photocatalyst-containing layer side light-shielding portion to the change-in-wettability layer, when disposing the photocatalyst-containing layer and the change-in-wettability layer with a prescribed gap in between, the prescribed gap is made accurate in terms of the dimension. Further, by radiating energy, in that state, from the photocatalyst-containing layer side substrate, the pattern of wettability is formed on the change-in-wettability layer with a high accuracy.

The method of forming the photocatalyst-containing layer side light-shielding portion is not limited but is suitably selected and used according to the property of the formation surface where formation is made of the photocatalyst-containing layer side light-shielding portion, the shielding property with respect to energy needed, etc.

For instance, a method may be adopted of forming a metallic thin film such as chrome, the thickness of which is 1000 to 2000 Å, by a sputtering method, vacuum deposition method, etc. and then patterning the thin film. This patterning method may be an ordinary patterning method such as sputtering.

The above-described method may be one wherein a layer that has been prepared by adding light-shielding particles such as carbon fine particles, metal oxide, inorganic pigment, organic pigment, etc. into a resinous binderis formed into a pattern. As the resinous binder, a material obtained by mixing together one, or two or more, resins such as polyimide resin, acrylic resin, epoxy resin, polyacrylamide, polyvinyl alcohol, gelatin, casein, cellulose, etc., photosensitive resin, or O/W emulsion type resinous composition such as one prepared by converting a reactive silicone into an emulsion can be used. The thickness of the resin-made light-shielding portion can be set to a value falling within a range of from 0.5 to 10µm. As the method of patterning the resin-made light-shielding portion, a method such as photolithography, printing, etc. that is generally used can be used.

Incidentally, although in the above-described explanation two formation positions of the photocatalyst-containing layer side light-shielding portion has been given (one of which is where that position is between the base material member and the photocatalyst-containing layer and the other of which is where that position is on the surface of the photocatalyst-containing layer) it is also possible to adopt an embodiment wherein the photocatalyst-containing layer side light-shielding portion is formed on the surface of the base material member on a side where no photocatalyst-containing layer is formed. In this embodiment, a method can be used wherein, for example, a photo-mask is adhered to the surface to an extent that permits it to be removably attached thereto, etc. and, in this case, the method can be used for example when causing a change of the wettability pattern in a small area.

### 3. Photocatalyst treatment process

In the present invention, next, a photocatalyst treatment process is executed wherein the photocatalyst-containing layer and the change-in-wettability layer are disposed so as to be in contact with each other and thereafter energy is radiated onto the resulting arrangement from a prescribed direction to form a wettability pattern including a hydrophilic region and a water-repellent region on the surface of the change-in-wettability layer.

### a. Disposing photocatalyst-containing layer and change-in-wettability layer

In this process, first, when performing radiation, the photocatalyst-containing layer and the change-in-wettability layer are disposed with a gap of 200µm or less in between.

In the present invention, a gap may not be provided and the photocatalyst-containing layer and the change-in-property layer may be adhered to each other. However, considering the pattern accuracy and increasing the efficiency of changing the property of the change-in-property layer, the gap preferably is set to fall within a range of 100µm or less, especially a range of from 0.2µm to 10µm.

By disposing the photocatalyst-containing layer and the surface of the change-in-property layer with a prescribed gap in between in the above-described way, oxygen and water as well as the active oxygen species produced due to the photo-catalytic action are detached or attached. More easilywhen making the gap between the photocatalyst-containing layer and the change-in-property layer narrower than a value falling within the above-described range, there ismore difficulty in detaching or attaching the active oxygen species. As a result of this, there is a possibility that the speed at which the property is changed will be slowed down. From this point of view, such a gap is not preferred. Where the gap in between is greater than a value falling within that range, it is more difficult for the active oxygen species to reach the change-in-property layer. In this case as well, there is a possibility that the speed at which the property is changed will be slowed down. From this point of view, such a gap is also not preferred.

In the present invention, the positioning to achieve the above-described gap needs only to be maintained at least during the exposure.

As the method of positioning the photocatalyst-containing layer and change-in-wettability layer with a uniform very narrow gap as described above, an example is a method wherein a spacer is used. Further, by using a spacer, it is possible to form a uniform gap. In addition, since the portion that the spacer contacts acts to prevent the photocatalytic action from extending to the surface of the change-in-wettability layer, a prescribed pattern of wettability can be formed on the change-in-wettability layer by forming this spacer so that it has a pattern similar to the wettability pattern described above.

In the present invention, although the spacer may be formed as a separate, single member, for simplifying the process it is preferable that, as has been explained under the preceding item "Photocatalyst-containing layer side substrate-preparing process", the spacer be formed on the surface of the photocatalyst-containing layer of the photocatalyst-containing layer side substrate. Incidentally, in the explanation of the photocatalyst-containing layer side substrate-preparing process, the spacer was referred to as the a photocatalyst-containing layer side light-shielding portion. However, in the present invention, because the spacer may need only function to protect the surface of the change-in-wettability layer so as to prevent the photocatalytic action from extending to it, the spacer may be formed using a material which does not function to shield radiation.

### b. Radiating energy onto the gap portion

Next, in the state where both layers are positioned with the above-described gap in between, radiation of the gap portion is performed. Incidentally, the wording "radiation of energy (exposure)" referred to in the present invention includes any radiation of energy that enables a change in wettability of the surface of the change-in-wettability layer by the photocatalyst-containing layer, and is not limited to visible light.

Ordinarily, the wavelength of light used for the exposure is set from a range of 400nm or less, preferably from a range of 380nm or less. This is because the preferred photocatalyst used in the photocatalyst-containing layer is titanium dioxide as described above and, if this photocatalyst is used, light having such a wavelength is preferable as the energy that activates the photocatalytic action.

As the light source that can be used for the exposure, examples are a mercury lamp, metal halide lamp, Xenon lamp, excimer lamp, and other various kinds of light sources.

In addition to the methods that perform pattern radiation via a photo-mask using the above-mentioned light sources, it is also possible to use a method of depiction radiation as a pattern by using laser light such as an excimer, YAG etc.

Also, the amount of energy that is used when performing exposure is defined as being that needed for the surface of the change-in-wettability layer to have its wettability changed due to the action of the photocatalyst in the photocatalyst-containing layer.

At this time, by performing exposure while heating the photocatalyst-containing layer, the sensitivity is increased. That, therefore, is preferable because the wettability can be changed efficiently. Specifically, heating within a range of from 30°C to 80°C is preferable.

The exposure direction in the present invention is dependent on the method of forming the wettability such as whether or not the photocatalyst-containing layer side light-shielding portion is formed, or on whether the photocatalyst-containing layer side substrate is transparent.

Where a photocatalyst-containing layer side light-shielding portion is formed, exposure needs to be carried out from the photocatalyst-containing layer side substrate side and, in addition, the photocatalyst-containing layer side substrate needs to be transparent to the energy that is radiated. Incidentally, in this case, if the photocatalyst-containing layer side light-shielding portion is formed on the photocatalyst-containing layer and, in addition, the light-shielding portion is used as a spacer as stated before, the exposure direction may be from the photocatalyst-containing layer substrate side or from the for-pattern-formation substrate side.

Also, the exposure direction when the photocatalyst-containing layer is formed as a pattern may be any direction only if energy is radiated onto the gap portion between the photocatalyst-containing layer and the change-in-wettability layer as described above.

Similarly, where using the above-described spacer, the exposure direction may be any directiononly if energy is radiated onto the gap portion.

If using a photo-mask, energy is radiated from the side where it is positioned.

### c. Removing photocatalyst-containing layer side substrate

When the above-described radiation of energy is finished, the photocatalyst-containing layer side substrate is taken away from its position opposed to the change-in-wettability layer, so that a pattern of wettability including a hydrophilic region and a water-repellent region is formed on the change-in-wettability layer.

### 4. Etceteras

Regarding the other respects in the present invention, such as, for example, the matter on the water-repellent region and the hydrophilic region, they are the same as those that were explained under the preceding item "A. Orientation film" and therefore the explanation is not repeated.

### C. Substrate with orientation film

Next, an orientation film-equipped substrate according to the present invention will be explained. The orientation film-equipped substrate according to the present invention is characterized by having a substrate and an orientation film that is formed on the substrate and that has a pattern including a water-repellent region and a hydrophilic region that is a region where the angle of contact with water is smaller than that in the water-repellent region. By having an orientation film wherein the hydrophilic region is formed within the water-repellent region as a pattern, where the resulting substrate is used in, for example, a liquid crystal display device in vertical orientation mode, it is possible to perform orientation division within the relevant pixel of the liquid crystal molecule that has been vertically oriented. Thus, it is possible by using the properties of the liquid crystal molecule to incline the liquid-crystalline molecule is vertically orietned when within the hydrophilic region when the liquid crystal molecule.

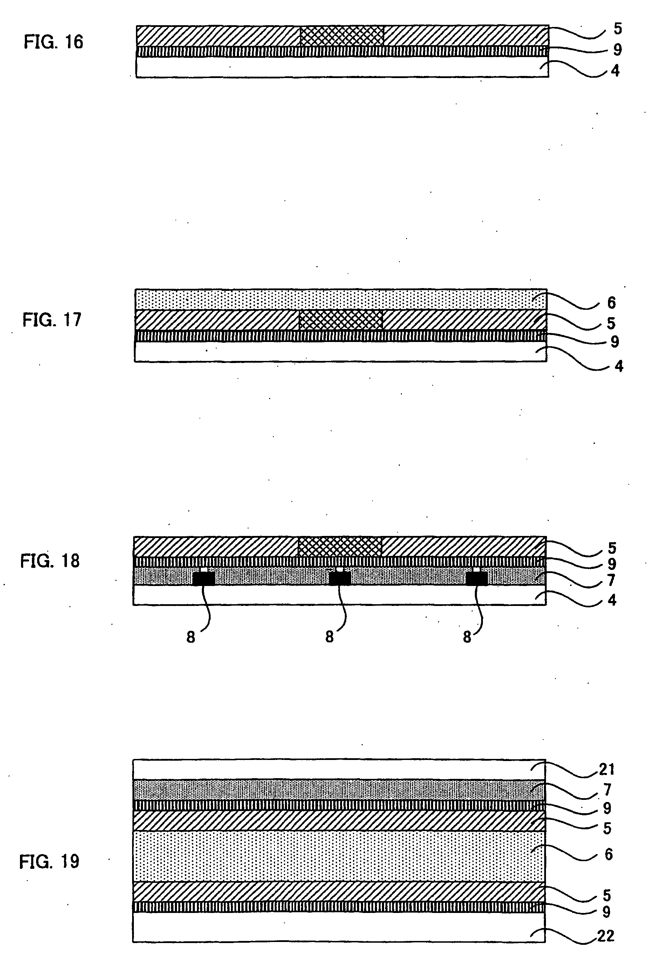

FIG. 16 illustrates an example of the above-described orientation film-equipped substrate according to the present invention, i.e. illustrates a state where the orientation film 5 is formed on the substrate 4 via a transparent electrode layer 9.

The orientation film used in the orientation film-equipped substrate according to the present invention is the same as that which has been explained under the preceding item "A. Orientation film". Therefore, the explanation is not repeated.

Also, the substrate used in the present invention ordinarily is a transparent substrate and may be the one such as glass that is not flexible or the one such as transparent resin that is flexible.

As illustrated in, for example, FIG. 17, in the present invention, a liquid crystal layer 6 is ordinarily disposed on the side of the surface of the orientation film.

Incidentally, by utilizing the orientation film of the present invention, it is also possible to form a semitransparent reflective film by orienting and hardening a hardenable cholesteric liquid crystal (e.g. a mixture of hardenable nematic liquid crystal and hardenable chiral agent). Also, using a hardenable nematic liquid crystal, hardenable short-pitch cholesteric liquid crystal, or hardenable discotic liquid crystal, as above, it is possible to orient and harden it with the orientation film of the present invention to form a difference-in-phase layer having an index of double refraction and use it as an optical compensation sheet.

For the liquid-crystalline molecule, which is a negative type liquid-crystalline material having a negative dielectric constant anisotropy, used in the above-described liquid crystal layer, the material is not limited if it has a nematic phase at normal temperature. Specifically, examples are MLC-6608, MLC-2037, MLC-2038, and MLC-2039 (trade marks) of Merck & Co., Inc.

The orientation film-equipped substrate of the present invention may be one wherein other layers are formed between the substrate and the orientation film. Or it may be one wherein, as illustrated in, for example, FIG. 18, a colored layer 7 and a light-shielding portion (black matrix) 8 formed at the boundary portion thereof are provided on a substrate 4; on the color layer 7 and the light-shielding portion 8 the transparent electrode layer 9 is provided; and on the layer 9 the orientation file 5, etc. is formed.

The above-described colored layer and light-shielding portion used in the present invention is not limited but they are ones ordinarily used in color filters. For the colored layer, a photosensitive resin is suitably used that contains a red, blue, or green pigment that is used in ordinary techniques of pigment dispersion, etc. For the light-shielding portion, metal such as chrome, a resin having dispersed therein particles having light-shielding properties such as carbon black, etc. are suitably used.

Also, the transparent electrode layer is not limited, but, generally, ITO is suitably used.

### D. Liquid crystal display device

Finally, the liquid crystal display device of the present invention will be explained. The liquid crystal display device of the present invention is characterized by comprising:
a color filter side substrate that has a first substrate, a colored layer that is formed on the first substrate, a transparent electrode layer formed on the colored layer, and an orientation film that is formed on the transparent electrode layer and that has on its surface on a side where a liquid crystal layer is contacted a pattern including a water-repellent region and a hydrophilic region that is a region where the angle of contact with water is smaller than that in the water-repellent region, and
an opposing substrate that has a second substrate, a transparent electrode layer formed on the second substrate, and an orientation film formed on the surface of the transparent electrode layer and that has on its surface where a liquid crystal layer is contacted therewith a pattern including a water-repellent region and a hydrophilic region that is a region where the angle of contact with water is smaller than that in the water-repellent region,
whereby the orientation film of the color filter side substrate and the orientation film of the opposing substrate are positioned to oppose each other; and
liquid crystal is sealed between the two orientation films.

The liquid crystal display device mentioned has an orientation film wherein the hydrophilic region is formed within the water-repellent region as a pattern. Therefore, in, for example, a liquid crystal display device in vertical orientation mode, an orientation division can be made within the pixel of the liquid crystal molecule that has been vertically oriented because the liquid crystal molecule which is vertically oriented within the water-repellent region is inclined within the hydrophilic region.

An example of the above-described liquid crystal device is illustrated in FIG. 19. First, the color filter side substrate having a color filter formed therein has the first substrate 21 on which there is formed the colored layer 7 that ordinarily has a pattern of red, green, and blue. Further, on that surface the transparent electrode layer 9 is formed and, further, on the surface of the resulting structure, the orientation film 5 is formed as stated above.

The opposing substrate that opposes the color filter side substrate has the second substrate 22, on which the transparent electrode 9 is formed, on which the above-described orientation film 5 is formed.

Incidentally, either the transparent electrode layer of the color filter side substrate or the transparent electrode layer of the opposing substrate side may be the one that has been formed in the active matrix mode.

The orientation film 5 of the color filter side substrate and the orientation film 5 of the opposing substrate side are positioned so as to oppose each other. Further, the liquid crystal molecules are sealed in the gap between these two films. As a result of this, a liquid crystal layer 6 is formed. The structure that has thus been obtained is the liquid crystal device of the present invention.

The above-described orientation film used in the liquid crystal display device according to the present invention is the same as that which has been explained in connection with the preceding item "A. Orientation film", so the explanation is not repeated. Also, the other first and second substrates are the same as that which has been explained in connection with the preceding item "C. Substrate with orientation film" and, further, the colored layer and transparent electrode layer and, the liquid crystal layer, are each the same as that which has been explained under the preceding item "C. Substrate with orientation film", so the explanation is not repeated.

It is to be noted that the present invention is not limited to the above-described embodiment. The above-described embodiment is only illustrative. Changes or modifications that have substantially the same construction as those which are made using the technical ideas described in the claimed scope of the present invention and exhibit the same functions and effects are included in the technical scope of the present invention.

### [Examples]

Hereinafter, the present invention will be concretely explained using Examples.

### (Example 1)

First, an orientation film was coated (applied) onto each of upper and lower substrates and, as the orientation film of the lower side substrate, the one that has formed thereon a wettability pattern having a water-repellent region and hydrophilic region was used.

The orientation film was prepared as follows. On a quartz glass substrate having formed thereon a pattern of light-shielding layer made of chrome, there was coated a for-use-as-photocatalyst titanium oxide coating material ST-K03 produced by Ishihara Sangyo Kaisha, Ltd. The resulting arrangement was dried at 150°C for 15 minutes to complete a photo-mask with photocatalyst-containing layer (a pattern-equipped substrate).

Next, 3 grams of an 0.1N aqueous solution of hydrochloric acid was added to a mixture of 5 grams of fluoroalkyl silane and 2 grams of tetraethoxy silane and the resulting mass was stirred at room temperature for 1 hour to prepare a solution. The solution was coated onto the substrate and the resulting substrate was dried at 150°C for 10 minutes to form a change-in-wettability layer.

Onto the resulting substrate, the above-described photo-mask was adhered. Then, using an ultrahigh mercury lamp, ultraviolet rays were radiated onto the resulting arrangement from the photo-mask side, at an illuminance of 20mW/cm² (365nm), for 180 seconds, to thereby form a pattern of wettability on the surface of the change-in-wettability layer. At this time, the angle of contact with water at the non-exposed portion was 108° while the angle of contact with water at the exposed portion was 7°. The gap between the substrates was 5µm. Incidentally, this gap was controlled using a spacer that was disposed in the liquid crystal layer and that gap was almost uniform within the display panel surface. As the spacer, there was used an SP series produced by Fine Chemicals Division, Sekisui Chemical Co., Ltd.

Between the substrates, a thermo-hardenable sealing material was coated on each of their outer-peripheral surfaces, and then they were bonded together. For controlling the gap between the substrates, the cell was heated while being pressed, so that the seals were cured. As the sealing material, there was used XN-54 produced by Mitsui Chemicals Inc. Into that cell, a liquid crystal material was filled by a vacuum injection technique. An MLC 6608 (trade mark) material produced by Merck & Co., Inc. was used as the liquid crystal material. This liquid crystal has negative dielectric anisotropic property and has the property that, when an electric field is applied, its molecular long axis is vertically oriented with respect to the direction in which the electric field is formed.

In FIG. 7 illustration is made of a state of no electric field's being applied, a state of an intermediate voltage being applied, and a state of an electric field's being applied, the liquid crystal display device obtained as above.

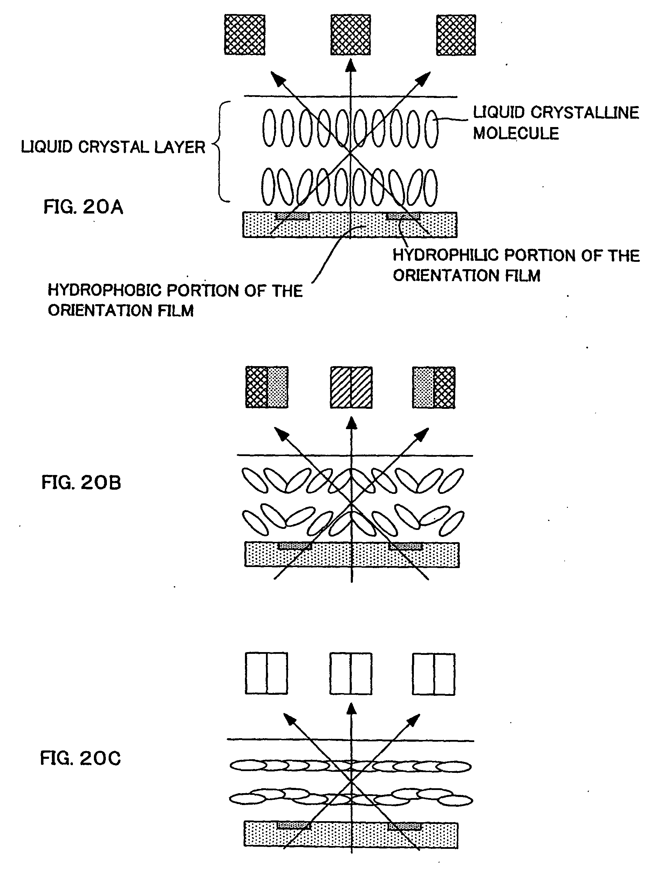

FIG. 20A illustrates an oriented state when no electric field is applied. In this case, since the orientation film of each of the upper/lower substrates exhibits substantially hydrophobic property, the liquid crystal molecule is substantially vertically oriented. In the orientation film hydrophilic region of the lower substrate and in the vicinity thereof, the liquid crystal molecule is somewhat inclined but this inclination is near to a state of verticalness. Therefore, even when the incident light passes through the liquid crystal layer, the plane of polarization does not change and the light is absorbed into a polarizing plate of the outgoing side. Resultantly, black display was obtained.

FIG. 20B is a view illustrating a state where a voltage has been applied to cause the liquid crystal to come to a state of its inclined orientation's being intermediate between the horizontal orientation and the vertical orientation. That state results in a display in half tone. In the hydrophilic region of the orientation film, with the molecule that is previously inclined being the starting point, the directions in which the molecules are inclined are determined, and thereby their orientation is divided. Since the regions wherein the inclinations of the liquid crystal molecules differ are formed as a plurality of areas within the relevant pixel, the difference in the passing amount of light that results from the difference in the viewing angle was complementarily averaged, with the result that the dependency on the viewing angle became better.

FIG. 20C illustrates a state where a voltage is sufficiently applied and the liquid crystal is almost horizontally oriented. In this case, a white display was made.

### (Example 2: Polyimide-made orientation film)

As the vertical orientation film material, JALS-688, JALS-204, JALS-2021, and JALS-2022 produced by JSR. and SE-751L and SE-1211 produced by Nissan Chemical Industries, Ltd. were used. Using a spin-coating technique, each of the above-described PI's was coated onto the ITO-equipped glass substrate, and the resulting arrangement was baked at 220°C for one hour.

Spin coating was performed for 5 seconds at 600rpm and subsequently for 15 seconds at 2400rpm. The thickness of the orientation film was measured using a direct-needle type film thickness meter, the result of which was 600Å. Although the polyimide film was a hydrophobic film, by performing ultraviolet-ray exposure through the intermediary of the exposure mask having the photocatalyst-containing layer coated on its uppermost surface, a pattern of hydrophilic region could be formed within the hydrophobic region.

In this Example, an arrangement wherein the photocatalyst-containing layer is formed on the exposure mask that has a light-shielding region in stripes each 50µm in width and a light-passing region in stripes each 25µm in width was used as the orientation film substrate.

As a result, a hydrophobic region 50µm in width and a hydrophilic region 25µm in width were formed on the substrate. The angle of contact with water on the surface of the hydrophobic region was 96°, so that a sufficiently high level of water repellency was exhibited. Also, exposure was performed via the substrate having a photocatalyst-containing layer with no light-shielding pattern thereon and, in this case, in the portions where the hydrophilic region was made, since the angle of contact with water changes within a range of from approximately 10° to approximately 30°, it was observed that the level of wettability was sufficiently changed and the relevant portions were made sufficiently hydrophilic.

The above-described substrate and another substrate having the same vertical-orientation polyimide disposed therein were aligned with each other and bonded together. At this time, in order to make the gap between the substrates almost 5µm, an SP series material produced by Fine Chemicals Division, Sekisui Chemical Co., Ltd. was spread over the other substrate. The spread density was controlled to be approximately 10 to 200 pieces/mm². The spreading method was a dry-spreading technique.

In order to ensure adhesion between the upper and the lower substrate as well as the closed space into which liquid crystal is to be filled, sealing material was coated onto the outer-peripheral part of each of the substrates to a width of substantially 1mm. Then, the resulting structures were subjected to pressing and then each sealant was thermo-hardened.

A negative type liquid crystal material of MLC-6608 that is produced by Merck & Co., Inc. was injected into the resulting structure to prepare a liquid crystal cell. When observing with a polarizing microscope, the initial orientation was vertical orientation. Further, when applying a voltage to the liquid crystal cell, a state was observed where the liquid crystal director was laid substantially parallel with the boundary between the hydrophilic region and the hydrophobic region. When a sufficiently high level of voltage was applied, the horizontal orientation wherein the director was laid alongside that boundary was obtained.

### (Example 3: IPS mode)

The IPS mode is a horizontally oriented liquid crystal mode, and horizontal-orientation processing is performed with respect to the substrate. In this Example, as the change-in-wettability layer, fluorine-based silicone was used, and, by designing the region occupied by the hydrophilic property to an area that is equal to or greater than that corresponding to the region occupied by the hydrophobic property, horizontal orientation was obtained.

Using a spin coating technique, a fluorine-based silicone that had been used in Example 1 was coated onto the ITO-equipped glass substrate to form a film. Although this fluorine-based silicone film is a hydrophobic film, by performing ultraviolet-ray exposure on it via an exposure mask having the photocatalyst-containing layer coated on its uppermost surface, a pattern of hydrophilic region and hydrophobic region could be formed on the substrate. This pattern is illustrated in FIG. 6. In this Example, the photocatalyst layer is formed on the exposure mask having a light-shielding region in stripes each 20µm in width and a light-passing region in stripes each 20µm in width.

Concretely, as illustrated in FIG. 6, a hydrophobic region 20µm in width and a hydrophilic region 20µm in width were formed on the substrate.

The fluorine-based silicone film has sufficient water repellency when the angle of contact with water thereof is around 110 degrees. Also, when exposure is performed via the substrate that has a photocatalyst-containing layer with no light-shielding pattern to form a hydrophilic region, the angle of contact with water changes within a range of from approximately 0 to approximately 10°, for which reason, it was observed that the wettability changed sufficiently and the film was made sufficiently hydrophilic.

The above-described substrate was aligned with another substrate having disposed thereon the same pattern of hydrophilicity and was bonded or adhered thereto. At this time, to make the gap between the substrates approximately 3 to 4µm, SP series produced by Fine Chemicals Division, Sekisui Chemical Co., Ltd. was spread on the other substrate.

The density of spreading was controlled to be about 10 to 200 pieces/mm². For ensuring adhesion between the upper and the lower substrate as well as the closed space into which liquid crystal is to be filled, sealing material was coated onto the outer-peripheral part of each substrate to a width of approximately 1mm. After the sealant was pressed, it was thermo-hardened.

A liquid material of MLC-2042 for IPS produced by Merck & Co., Inc. was injected to prepare a liquid crystal cell. When the resulting structure was observed using a polarizing microscope, a state where the director was substantially parallel with the boundary between the hydrophilic region and the hydrophobic region was observed.

Further, a state was observed where the liquid crystal director within the liquid crystal cell was near to the electric lines of force direction of the electric field applied, according to the intensity of the electric field applied.

### (Example 4: TN mode)

The surface of the substrate in TN mode is a horizontally oriented liquid crystal mode, and horizontal orientation processing is executed with respect to the substrate. In this Example, for the change-in-wettability layer, the fluorine-based silicone that had been used in Example 1 was used.

The region occupied by hydrophilicity was designed to be equal to or greater than the region occupied by hydrophobicity, and, horizontal orientation processing was executed with respect to the resulting arrangement. Thereby, a cell illustrated in FIG. 9 was prepared which was configured so that the orientation direction of the upper substrate and that of the lower substrate intersected each other at a right angle.

Using a spin coating technique, the fluorine-based silicone of Example 1 was coated onto the ITO-equipped glass substrate to form a film. This fluorine-based silicone film was a hydrophobic film. On the other hand, by performing ultraviolet-ray exposure with respect to it via an exposure mask having a photocatalyst-containing layer coated on its uppermost surface, a hydrophilic region and hydrophobic region could be formed on the substrate. In this Example, the photocatalyst layer was formed on the exposure mask having a light-shielding region in stripes each 20µm in width and a light-passing region in stripes each 20µm in width.

Using the resulting arrangement, a hydrophobic region 20µm in width and a hydrophilic region 20µm in width were formed on the substrate. The fluorine-based silicone film has sufficient water repellency when the angle of contact with water thereof is around 110 degrees. Also, when exposure is performed via the substrate that has a photocatalyst-containing layer with no light-shielding pattern, the angle of contact with water changes within a range of from approximately 0 to approximately 10°, for which reason, it was observed that the wettability changed sufficiently and the film was made sufficiently hydrophilic.

The above-described substrate was aligned with another substrate having disposed therein the same pattern of hydrophilicity and was bonded or adhered thereto. At this time, to make the gap between the substrates approximately 4 to 5µm, SP series produced by Fine Chemicals Division, Sekisui Chemical Co., Ltd. was spread on the other substrate.

The density of spreading was controlled to be about 10 to 200 pieces/mm². For ensuring the adhesion between the upper and the lower substrate as well as the closed space into which liquid crystal is to be filled, sealing material was coated onto the outer-peripheral part of each substrate to a width of approximately 1mm. After the sealant was pressed, it was thermo-hardened.

A liquid material of MLC-2042 for TN produced by Merck & Co., Inc. was injected to prepare a liquid crystal cell. When the resulting structure was observed using a polarizing microscope, the director was substantially parallel with the boundary between the hydrophilic region and the hydrophobic region in the upper and the lower substrate. Further a state was observed where the director was twisted 90° in the thickness direction of the liquid crystal layer.

Further, a state was observed where the liquid crystal director within the liquid crystal cell was near to the electric lines of force direction of the electric field applied so as to be vertical with respect to the substrate, according to the intensity of the electric field applied.

### (Example 5: MVA mode)

Vertical orientation processing is executed with respect to the surface of the substrate in MVA mode. In this Example, for the change-in-wettability layer, a fluorine-based silicone was used. Also, the region occupied by hydrophobicity was designed to be equal to or greater than the region occupied by hydrophilicity, and, vertical orientation processing was executed with respect to the resulting arrangement.

Also, the surface of each of the upper and the lower substrate was designed to have a pattern configuration of hydrophilic property to give a region where the liquid crystal is inclined beforehand in a prescribed direction, or a region where the liquid crystal is likely to be inclined in a prescribed direction, as illustrated in FIG. 3.

In this Example, isosceles-triangular regions the bottom side of which is 20µm and the height of which is 10 to 50µm were disposed at intervals of 10 to 50µm. The pattern was prepared such that the respective forward ends of the isosceles-triangular regions were distributed in four directions within the substrate region. The disposition pattern of the isosceles triangle was disposed alongside, and in the vicinity of, the ridge of the rib in the MVA mode and the forward end of the isosceles triangle was disposed to oppose the ridge. This is because each liquid crystal molecule in the vicinity of the forward end of the isosceles triangle is inclined to the hydrophilic region when an electric field has been applied.

Using a spin coating technique, a fluorine-based silicone described above was coated onto the ITO-equipped glass substrate to form a film. This fluorine-based silicone film was a hydrophobic film. By performing ultraviolet-ray exposure with respect to it via an exposure mask having a photocatalyst-containing layer coated on its uppermost surface, a hydrophilic region and hydrophobic region could be formed on the substrate. The fluorine-based silicone film had sufficient water repellency when the angle of contact with water thereof was around 110 degrees.

Also, when exposure is performed via the substrate that has the photocatalyst-containing layer with no light-shielding pattern, the angle of contact with water changes within a range of from approximately 0 to approximately 10°, for which reason, it was observed that the wettability changed sufficiently and the film was made sufficiently hydrophilic.

The above-described substrate was aligned with another substrate having disposed thereon the same pattern of hydrophobicity and hydrophilicity and was bonded or adhered thereto. At this time, to make the gap between the substrates approximately 3.5 to 4.5µm, SP series produced by Fine Chemicals Division, Sekisui Chemical Co., Ltd. was spread on the other substrate.

The density of spreading was controlled to be about 10 to 200 pieces/mm². For ensuring the adhesion between the upper and the lower substrate as well as the closed space into which liquid crystal is to be filled, sealing material was coated onto the outer-peripheral part of each substrate to a width of approximately 1mm. After the sealant was pressed, it was thermo-hardened.

A negative type liquid material of MLC-6608 produced by Merck & Co., Inc. was injected to prepare a liquid crystal cell. When the resulting structure was observed using a polarizing microscope, the initial orientation was vertical orientation. Further, when a voltage was applied to the liquid crystal cell, a state was observed where the director was inclined from the triangular hydrophilic region to the orthogon direction.

Further, because the acute forward end of each triangle within the region is directed in any one of the four directions, a 4 division orientation was observed wherein the region was distributed into regions wherein the liquid crystal molecules were inclined with four inclinations.

## Claims

1. An orientation film comprising a pattern, on a surface for contacting a liquid crystal layer, that includes a water-repellent region and a hydrophilic region where the angle of contact with water is smaller than that in the water-repellent region.

2. An orientation film according to claim 1, wherein the angle of contact with water in the water-repellent region is greater than that in the hydrophilic region by an angle falling within a range of from 10° to 120°.

3. An orientation film according to claim 1 or 2, wherein the angle of contact with water in the water-repellent region is from 40° to 120°.

4. An orientation film according to one of claims 1 to 3, wherein the orientation film comprises a compound having polyimide, polyamide, or organopolysiloxane as the principal chain and having linear alkyl group, or fluorine-containing alkyl group, having a number of carbons from 4 to 22 inclusive as a side chain; and the density of the side chains in the water-repellent region is lower than that of the side chains in the hydrophilic region.

5. An orientation film according to claim 4, wherein, in the water-repellent region, the weight of the side chains is 5% by weight or more based upon the total weight of the compound.

6. An orientation film according to claim 4 or 5, wherein the organopolysiloxane is present and is polysiloxane that contains a fluoroalkyl group and is a hydrolytic condensate or co-hydrolytic condensate of one, or two or more, kinds of silicon compounds each of which is expressed by YₙSiX₍₄₋ₙ₎ (where Y represents an alkyl group, fluoroalkyl group, vinyl group, amino group, phenyl group, or epoxy group; X represents an alkoxyl group or halogen; and n represents an integer of from 0 to 3 inclusive.).

7. An orientation film according to claim 4 or 5, wherein the polyimide is present and is prepared by reacting and polymerizing at least a tetracarboxylic acid component and a diamine component containing a linear alkyl group to make a polyimide precursor containing a linear alkyl group, and imidizing the precursor.

8. A method of manufacturing an orientation film, comprising an orientation film-forming process for forming an orientation film on a substrate, and a pattern-forming process for forming on the surface of the orientation film a pattern including a water-repellent region and a hydrophilic region where the angle of contact with water is smaller than that in the water-repellent region.

9. A method of manufacturing an orientation film according to claim 8, wherein the orientation film formed on the substrate is a change-in-wettability layer the wettability on the surface of which changes due to the action of photocatalyst; and the pattern-forming process comprises:
a process for preparing a photocatalyst-containing layer side substrate that has a photocatalyst-containing layer containing photocatalyst and a base material member; and
a photocatalyst treatment process for, after positioning the photocatalyst-containing layer and the change-in-wettability layer such that the gap therebetween is 200µm or less, radiating light energy from a prescribed direction onto the resulting arrangement to form a pattern, the pattern including a hydrophilic region and a water-repellent region, on the surface of the change-in-wettability layer.

10. A method of manufacturing an orientation film according to claim 9, wherein the photocatalyst-containing layer side substrate comprises a base material member and a photocatalyst-containing layer formed, on the substrate, into a pattern configuration.

11. A method of manufacturing an orientation film according to claim 9, wherein the photocatalyst-containing layer side substrate comprises a base material member, a photocatalyst-containing layer formed on the substrate, and a photocatalyst-containing layer side light-shielding portion formed into a pattern configuration; and
the radiation of the energy in the pattern-forming process is performed from the photocatalyst-containing layer side substrate.

12. A method of manufacturing an orientation film according to claim 11, wherein, in the photocatalyst-containing layer side substrate, the photocatalyst-containing layer side light-shielding portion is formed into a pattern configuration on the base material member; and, further, on the light-shielding portion, the photocatalyst-containing layer is formed.

13. A method of manufacturing an orientation film according to claim 11, wherein, in the photocatalyst-containing layer side substrate, the photocatalyst-containing layer is formed on the base material member and, on this photocatalyst-containing layer, the photocatalyst-containing layer side light-shielding portion is formed into a pattern configuration.

14. A method of manufacturing an orientation film according to one of claims 9 to 13, wherein the photocatalyst-containing layer consists of photocatalyst.

15. A method of manufacturing an orientation film according to claim 14, wherein the photocatalyst-containing layer is prepared by forming photocatalyst onto the base material member, as a film, by a vacuum film-making technique.

16. A method of manufacturing an orientation film according to one of claims 9 to 13, wherein the photocatalyst-containing layer has photocatalyst and a binder.

17. An orientation film-equipped substrate comprising a substrate, and an orientation film that is formed on the substrate and that has on a surface for contacting a liquid crystal layer a pattern including a water-repellent region and a hydrophilic region where the angle of contact with water is smaller than that in the water-repellent region.

18. An orientation film-equipped substrate according to claim 17, wherein the liquid crystal layer is on the surface of the orientation film.

19. An orientation film-equipped substrate according to claim 18, wherein the substrate has on its surface a colored layer; and on the surface of the colored layer there is a transparent electrode layer; and on the transparent electrode layer there is the orientation film.

20. A liquid crystal display device comprising:
a color filter side substrate that has a first substrate, a colored layer that is formed on the first substrate, a transparent electrode layer formed on the colored layer, and an orientation film formed on the transparent electrode layer that has on its surface for contacting a liquid crystal layer a pattern including a water-repellent region and a hydrophilic region where the angle of contact with water is smaller than that in the water-repellent region, and
an opposing substrate that has a second substrate, a transparent electrode layer formed on the second substrate, and an orientation film formed on the surface of the transparent electrode layer that has on its surface for contacting a liquid crystal layer a pattern including a water-repellent region and a hydrophilic region where the angle of contact with water is smaller than that in the water-repellent region,
whereby the orientation film of the color filter side substrate and the orientation film of the opposing substrate are positioned so as to oppose each other; and
liquid crystal is sealed into between the two orientation films.
